(19) Europäisches Patentamt
European Patent Office
Office européen des brevets

(11) **EP 4 451 712 B1**

(12) **EUROPEAN PATENT SPECIFICATION**

(45) Date of publication and mention
of the grant of the patent:
**27.05.2026 Bulletin 2026/22**

(21) Application number: **22921077.8**

(22) Date of filing: **19.01.2022**

(51) International Patent Classification (IPC):
***H04L 12/46*** *(2006.01)*

(52) Cooperative Patent Classification (CPC):
**H04L 12/4625; H04W 4/06; H04W 4/48**

(86) International application number:
**PCT/CN2022/072772**

(87) International publication number:
**WO 2023/137630 (27.07.2023 Gazette 2023/30)**

(54) **IN-VEHICLE COMMUNICATION SYSTEM, DEVICE AND SYSTEM**

FAHRZEUGINTERNES KOMMUNIKATIONSSYSTEM, VORRICHTUNG UND SYSTEM

SYSTÈME, DISPOSITIF ET SYSTÈME DE COMMUNICATION EMBARQUÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.10.2024 Bulletin 2024/43**

(73) Proprietor: **Huawei Technologies Co., Ltd.
Shenzhen, Guangdong 518129 (CN)**

(72) Inventors:
• **SHI, Yongjie
Shenzhen, Guangdong 518129 (CN)**
• **ZHONG, Qiwen
Shenzhen, Guangdong 518129 (CN)**

• **DU, Wenhua
Shenzhen, Guangdong 518129 (CN)**
• **LIU, Yongzhi
Shenzhen, Guangdong 518129 (CN)**

(74) Representative: **Grünecker Patent- und
Rechtsanwälte
PartG mbB
Leopoldstraße 4
80802 München (DE)**

(56) References cited:
WO-A2-01/26338          CN-A- 106 341 794
CN-A- 106 506 271       CN-U- 209 072 520
US-A1- 2015 256 247     US-A1- 2020 008 044
US-A1- 2020 252 838     US-A1- 2021 099 251
US-B1- 7 484 008

## Description

### TECHNICAL FIELD

This application relates to communication technologies, and in particular, to an in-vehicle communication method, an apparatus, and a system.

### BACKGROUND

In a conventional in-vehicle communication architecture, a controller area network (Controller Area Network, CAN) bus, a local interconnect network (Local Interconnect Network, LIN) bus, a time-triggered bus FlexRay, a media oriented system transport (Media Oriented System Transport, MOST) bus, and the like are mainly used to connect nodes in a vehicle such as power assembly, vehicle body control, and assisted driving for data interaction in the vehicle.

With the gradual popularization of intelligent vehicles and new energy vehicles, there are more sensors and controllers in a vehicle, and devices such as a lidar and a high-definition camera have higher requirements on definition. Therefore, an amount of data to be transmitted in an in-vehicle system increases exponentially. However, when transmitting and processing a large amount of data, a conventional communication system has problems such as a long transmission delay, a large jitter, and low bandwidth utilization, and cannot meet requirements for efficient and high-speed data transmission.

US 2020/008044 A1 discloses an MSP center being connected with individual MSP edge servers via respective MCE-If reference points. The MSP center server may include network interface circuitry coupled with processing circuitry wherein the network interface circuitry may be arranged to communicatively couple the MSP center server with the plurality of MSP edge servers and the processing circuitry is arranged to operate an MSP edge node allocation module that manages driving assistance related data sessions and service continuity for a vehicle system across multiple MSP edge servers in a multi-radio access technology environment.

### SUMMARY

This application provides an in-vehicle communication method, an apparatus, and a system, to reduce a delay and a jitter of data transmission in an in-vehicle system and improve bandwidth utilization. To achieve the foregoing objectives, the following technical solutions are used in this application.

It is provided an in-vehicle communication system according to claim 1 and an in-vehicle communication method according to claim 8.

According to a first aspect, an embodiment of this application provides an in-vehicle communication system, including:

multiple gateways connected through a bus, where an automotive slice network (Automotive Slice Network, ASN) apparatus is disposed in each gateway; the ASN apparatus sends, to one or more of an in-vehicle service node, a controller, or an in-vehicle networked terminal through a physical interface that is on the gateway and that is divided based on a slot rule, data carried in an ASN transport unit ATU that is decapsulated by the ASN apparatus, or sends, to another gateway connected to the gateway, an ATU encapsulated by the ASN apparatus; and the ATU is obtained by encapsulating data of each in-vehicle service based on a physical layer coding rule that adapts to the bus; and the in-vehicle service node, the controller, or the in-vehicle networked terminal connected to the gateway, configured to receive decapsulated data sent by the gateway or send, to the gateway, data corresponding to an in-vehicle service of the in-vehicle service node, the controller, or the in-vehicle networked terminal.

The in-vehicle communication system includes many in-vehicle services, such as an entertainment service, in-vehicle control, video surveillance, and vehicle positioning. Data transmission of these in-vehicle services is performed over the bus based on interconnected gateways, in-vehicle service nodes, controllers, or in-vehicle networked terminals, so as to provide support for a user to drive a vehicle.

In a conventional technology, all data is forwarded through a complete packet, and a gating cycle of each queue needs to be long enough to ensure that a longest packet can be sent. This results in a relatively long delay. In addition, this data transmission manner is affected by factors such as a gating queue orchestration algorithm and packet length alignment. Consequently, bandwidth utilization is low. An in-vehicle service features a simple service type, sometimes a small amount of service data, or the like. Therefore, the foregoing technology is more disadvantageous when a relatively short packet is transmitted. To reduce a delay and improve bandwidth utilization, this application provides an in-vehicle communication system. In this system, an ASN apparatus is disposed in each gateway. The ASN apparatus sends data in an ASN transport unit (ASN transport Unit, ATU) to one or more of an in-vehicle service node, a controller, or an in-vehicle networked terminal through a physical interface that is divided based on a slot rule and that is on a gateway in which the ASN apparatus is disposed. The data that is carried in the ATU and that is sent to the in-vehicle service node, the controller, or the in-vehicle networked terminal is obtained by the ASN through decapsulation. The ASN apparatus may further transmit, to another gateway connected to the gateway, an ATU encapsulated by the ASN apparatus. In different in-vehicle communication systems, an ASN is configured between gateways. ASNs use a same physical layer coding rule that adapts to a bus. Therefore, a same rule may be used to decapsulate a received ATU. If data obtained after decapsulation needs to be further transmitted to a next gateway, the data is still carried by a to-be-encapsulated ATU, and is further transmitted after the ASN performs encapsulation to obtain a new ATU. If the data is needed only by an in-vehicle service node, a controller, or an in-vehicle networked terminal connected to a current gateway, the current gateway correspondingly sends the data to where the data is needed. The data is not further carried by the to-be-encapsulated ATU for subsequent transmission. Therefore, an ATU may be used to directly transmit data between gateways at the physical layer, and data may be directly transmitted between a gateway and an in-vehicle service node, a controller, or an in-vehicle networked terminal connected to the gateway. The in-vehicle service node, the controller, or the in-vehicle networked terminal does not need to perform ATU encapsulation or decapsulation.

When the in-vehicle service node, the controller, or the in-vehicle networked terminal needs to transmit data, the data may also be sent to a gateway connected to the in-vehicle service node, the controller, or the in-vehicle networked terminal. The data may also be added to a position that is in a to-be-encapsulated ATU and that corresponds to an in-vehicle service of the data, encapsulated into an ATU by the ASN, and transmitted to another gateway.

Data of different in-vehicle services comes from different in-vehicle service nodes, controllers, or in-vehicle networked terminals. The data is encapsulated, based on the physical layer coding rule that adapts to the bus, into an ATU by an ASN in a gateway, and then is transmitted between gateways. The ATU is obtained by encapsulating data of each in-vehicle service based on the physical layer coding rule that adapts to the bus, and is transmitted through the physical interface divided based on the slot rule. Therefore, the ATU can be transmitted at a physical layer of the bus. This greatly improves a transmission speed and reduces a transmission delay and jitter.

The ATU is transmitted through the physical interface that is on the gateway and that is divided based on the slot rule. The physical interface is divided into multiple slots based on the slot rule. Each slot corresponds to an in-vehicle service, and is used to transmit data that is in the ATU and that corresponds to the in-vehicle service. Therefore, it can be ensured that data of each in-vehicle service is transmitted by a slot corresponding to the data. In other words, each slot correspondingly transmits data of an in-vehicle service, and no bandwidth is wasted during transmission. This greatly improves bandwidth utilization.

In a possible implementation, the gateway is specifically configured to send, on demand if the ASN apparatus determines that multiple pieces of data in data obtained by the ASN apparatus through decapsulation are data to be used by the gateway, the multiple pieces of data to the in-vehicle service node, the controller, or the in-vehicle networked terminal connected to the gateway; and the gateway is further configured to: if the gateway receives the data that corresponds to the in-vehicle service of the in-vehicle service node, the controller, or the in-vehicle networked terminal connected to the gateway and that is sent by the in-vehicle service node, the controller, or the in-vehicle networked terminal, encapsulate the data into an ATU by using the ASN apparatus, and send the ATU to another gateway.

In the in-vehicle communication system, data corresponding to different in-vehicle services may be needed by one or more different in-vehicle service nodes, controllers, or in-vehicle networked terminals. After receiving an ATU, each gateway may determine, based on a preset rule, which data is needed by the in-vehicle service node, the controller, or the in-vehicle networked terminal connected to the gateway. After decapsulation, the needed data may be sent by the gateway to the corresponding in-vehicle service node, the controller, or the in-vehicle networked terminal based on a requirement through the physical interface divided based on the slot rule. The data is sent through a slot on the physical interface. Therefore, transmission can still be performed only through the physical layer, which improves a transmission speed. When an in-vehicle service node, a controller, or an in-vehicle networked terminal needs to transmit data to another gateway, the to-be-transmitted data is first sent to a gateway connected to the in-vehicle service node, the controller, or the in-vehicle networked terminal. The ASN disposed in the gateway encapsulates the data into an ATU by mapping the data to different in-vehicle services, and sends the ATU to the another gateway through the physical interface that is on the gateway and that is divided based on the slot rule. This still complies with a physical layer transmission rule, and transmission can be performed through the physical layer, with a fast transmission speed, a short delay, and a small jitter. In a possible implementation, the physical interface divided based on the slot rule is a physical interface whose bandwidth is divided based on a slot quantity that is determined based on the bandwidth of the physical interface of the bus, an overhead of an encapsulation unit, and a minimum bandwidth granularity for carrying a service.

In the in-vehicle communication system, it is assumed that the bandwidth of the physical interface is represented by Qw measured in Gbit/s; the minimum bandwidth granularity for carrying a service is represented by Ni measured in Mbit/s, that is, a bandwidth granularity for each slot obtained through division is represented by Ni measured in Mbit/s; the overhead of the encapsulation unit is represented by Mo%; and the slot quantity is represented by P. In this case, the following is defined: $P=Qw*(100\%-Mo\%)* 1000/Ni$. The physical interface whose bandwidth is divided based on a slot quantity is a physical interface that is divided into P slots. Each slot corresponds to data of an in-vehicle service. When data of the in-vehicle service requires a large bandwidth, a quantity of slots allocated for correspondingly transmitting the data increases accordingly. When data of the in-vehicle service requires a small bandwidth, a quantity of slots allocated for correspondingly transmitting the data decreases accordingly. When ATU transmission is performed in this manner, bandwidth utilization can be improved. In addition, each in-vehicle service is allocated to a corresponding slot for transmission, and therefore hard isolation of transmission is implemented. In this way, data can be transmitted in a more accurate manner, and a transmission error is less likely to occur.

In a possible manner, the ATU includes multiple ASN packet data units (ASN Packet Data Unit, APDU), and the APDU includes an overhead (Overhead, OH) and a slot (slot) payload that carries data. Data carried by each slot payload corresponds to an in-vehicle service, and the data is transmitted through a slot that is on the physical interface and that corresponds to the in-vehicle service corresponding to the data. The OH is formed by a reserved part, a multiframe indication, message content, a type indication, and a cyclic redundancy check code, where the multiframe indication indicates a sequence number of an ATU corresponding to an APDU to which the OH belongs in the multiframe, the message content is used to carry message data, and the type indication indicates content carried in the reserved part.

It should be noted that a payload used to carry data in each APDU is a slot payload, which corresponds to data of an in-vehicle service. Similar to data transmission performed through a slot, when data of the in-vehicle service is large in size, a quantity of slot payloads allocated for correspondingly carrying the data increases accordingly. When data of the in-vehicle service is small in size, a quantity of slot payloads allocated for correspondingly carrying the data decreases accordingly.

It may be defined that 96 slot payloads in each APDU are used to carry data. The slot payload is a minimum unit for carrying data in the APDU, and each ATU includes one APDU. To adapt to different bandwidths of the physical interface, multiple ATUs may form a multiframe, and a quantity of ATUs in each multiframe is set to be different based on different bandwidth rates on the physical interface. The gateway is specifically configured to transmit, through a slot on the physical interface, an ATU included in a multiframe to the gateway connected to the gateway. APDUs are carried in physical layer structures with different rates, the quantity of ATUs in each multiframe may be determined on the basis that basic APDU structures are consistent.

A corresponding position is provided in an APDU for carrying an in-vehicle service. When an ATU is transmitted between gateways after encapsulation, a corresponding slot is also provided for transmission. In this data transmission manner, data can be directly transmitted at the physical layer, and can be carried and transmitted in positions corresponding to different in-vehicle services. This can greatly reduce a transmission delay. Transmission at the physical layer may be performed on electrical ports of various rates, such as 100BASE-T1, 1000BASE-T1, and 10GBASE-T1. Therefore, in the foregoing manner of carrying data by using an APDU, an in-vehicle service can be transmitted at the physical layer without being aware of information about a physical layer transmission pipe. This can implement transparent transmission based on a physical layer standard, and can better adapt to evolution of the physical layer standard.

In a possible manner, in the in-vehicle communication system, different physical layer coding formats are used on different buses. The bus is an Ethernet bus, and the ATU further includes a byte preamble, an end-of-frame delimiter (End-of-Frame Delimiter, EFD), and an interframe gap (Inter-Packet Gap, IPG). For another bus, if an ATU is obtained by encapsulating other content on the basis that the ATU includes the foregoing APDU, hard isolation and transparent transmission at the physical layer can also be implemented.

In a possible manner, the slot payload carries K pieces of 65B data, K is a positive integer, and each slot on the physical interface transmits K pieces of 65B data each time. In order to ensure that there is no waiting delay for bit width conversion in a process of data switching from input to output when the ATU is transmitted on the physical interface, each of P defined slots on the physical interface transmits K pieces of 65B data each time. When the carried data is encapsulated on the gateway, it can also be defined that each slot payload carries K pieces of 65B data.

For the Ethernet bus, a value of K may be any integer from 1 to 8. To reduce a data transmission delay of a small in-vehicle service, the value of K may be 1 or 2.

According to a second aspect, an embodiment of this application provides an automotive slice network ASN apparatus, including:

a decapsulation processing module, configured to: receive, through a physical interface of a bus, an ASN transport unit ATU sent by another gateway, and decapsulate the ATU based on a physical layer coding rule that adapts to the bus to obtain data, where the physical interface is an interface divided based on a slot rule;

a switch module, configured to correspondingly switch, to a to-be-encapsulated ATU, data part that is in the data and that is to be sent to another gateway; and

an encapsulation processing module, configured to: encapsulate the to-be-encapsulated ATU based on the physical layer coding rule that adapts to the bus to obtain an encapsulated ATU, and send, through the physical interface, the encapsulated ATU to a gateway connected to a current gateway.

The ASN apparatus is disposed in the gateway of the foregoing system. Each gateway receives an ATU sent by another gateway connected to the gateway. Gateways in a same in-vehicle communication system agree to use a same physical layer coding rule that adapts to the bus. Therefore, after receiving the ATU, the decapsulation processing module in the ASN performs decapsulation based on the same physical layer coding rule that adapts to the bus, to obtain data corresponding to different in-vehicle services. The data includes data to be reserved by a current gateway, that is, data to be dropped off in the current gateway; and also includes data to be sent to another gateway. The data to be sent to the another gateway is switched by the switch module to a position that is in the to-be-encapsulated ATU and that corresponds to an in-vehicle service of the data, and then is encapsulated by the encapsulation processing module and sent to the another gateway. The physical interface used by the decapsulation processing module to receive the ATU and the physical interface for sending the encapsulated ATU are divided based on a slot rule. Therefore, all data in the ATU may be transmitted through a corresponding in-vehicle service in a slot, so that the data is transmitted at a physical layer in a fast and hard-isolation manner.

In a possible manner, the physical interface divided based on the slot rule is a physical interface whose bandwidth is divided based on a slot quantity that is determined based on the bandwidth of the physical interface of the bus, an overhead of an encapsulation unit, and a minimum bandwidth granularity for carrying a service.

In a possible manner, the encapsulation processing module is specifically configured to send, through a slot on the physical interface, an ATU included in a multiframe to the gateway connected to the current gateway, where a quantity of ATUs in the multiframe is determined based on the bandwidth of the physical interface.

In a possible manner, the ATU includes multiple ASN packet data units APDUs, and the APDU is formed by an overhead OH and a slot payload that carries data. Data carried by each slot payload corresponds to an in-vehicle service, and the data is transmitted through a slot that is on the physical interface and that corresponds to the in-vehicle service corresponding to the data. The OH is formed by a reserved part, a multiframe indication, message content, a type indication, and a cyclic redundancy check code, where the multiframe indication indicates a sequence number of an ATU corresponding to an APDU to which the OH belongs in the multiframe, the message content is used to carry message data, and the type indication indicates content carried in the reserved part.

In a possible manner, the bus is an Ethernet bus, and the ATU further includes a byte preamble, an end-of-frame delimiter EFD, and an interframe gap IPG.

In a possible manner, the decapsulation processing module is specifically configured to: decapsulate a received first ATU to obtain at least one piece of first data, and obtain an ingress service identifier based on an in-vehicle service corresponding to the first data, where the first data is data carried by one slot payload. The switch module is specifically configured to: determine a corresponding egress service identifier based on the ingress service identifier, and switch first data part that is in the first data and that is to be sent to another gateway to a corresponding slot payload in a to-be-encapsulated ATU indicated by the egress service identifier corresponding to the first data, to obtain second data. The encapsulation processing module is specifically configured to: encapsulate the second data in the to-be-encapsulated ATU based on the physical layer coding rule to obtain a second ATU, and send, through a slot that is on the physical interface and that corresponds to an in-vehicle service corresponding to each piece of second data, the second ATU to the gateway connected to the current gateway.

Each ASN pre-stores a configured ingress service identifier, egress service identifier, and in-vehicle service corresponding to the egress service identifier. A correspondence may be correspondingly represented by using a slot configuration table, or may be a one-to-one correspondence in another form. The correspondence may further indicate whether the in-vehicle service is data to be used by the current gateway.

In a possible manner, the apparatus further includes a control module, configured to: if the decapsulation processing module determines, based on the ingress service identifier obtained based on the in-vehicle service corresponding to the first data, that multiple pieces of first data are data to be used by the current gateway, send the multiple pieces of first data to an in-vehicle service node, a controller, or an in-vehicle networked terminal connected to the current gateway.

In a possible manner, the encapsulation processing module is further configured to: if third data sent by one or more of the in-vehicle service node, the controller, or the in-vehicle networked terminal connected to the current gateway is received, and a slot payload corresponding to an in-vehicle service corresponding to the third data in the to-be-encapsulated ATU does not carry data, add the third data to the slot payload corresponding to the in-vehicle service of the third data, where each piece of third data is carried by one slot payload; encapsulate, based on the physical layer coding rule, the to-be-encapsulated ATU that carries the second data and the third data to obtain a third ATU; and send the third ATU to the gateway connected to the current gateway.

It should be noted that if the second data, obtained by switching the first data obtained from the received ATU through decapsulation to the encapsulation module, occupies all slot payloads that are in the to-be-encapsulated ATU and that correspond to a specific in-vehicle service, third data part that is in the third data and that corresponds to the in-vehicle service may wait for a next to-be-encapsulated ATU, and be transmitted by being added to an idle slot payload that is in the next to-be-encapsulated ATU and that corresponds to the in-vehicle service.

In a possible manner, a data reassembly module is configured to: if the decapsulation processing module determines, based on the ingress service identifier obtained based on the in-vehicle service corresponding to the first data, that multiple pieces of first data are data to be used by the current gateway, aggregate first data part that is in the first data and that needs to be reassembled into a packet.

The switch module is configured to: cache first data part that is in the multiple pieces of first data and that does not need to be reassembled into a packet; and when the data reassembly module obtains the packet through reassembly, send, together with the packet, first data part that is in the cached first data and that corresponds to a same in-vehicle service as the packet to an in-vehicle service node, a controller, or an in-vehicle networked terminal corresponding to the in-vehicle service.

In a possible manner, the encapsulation processing module is specifically configured to add K pieces of 65B data corresponding to a same service to a slot payload corresponding to an in-vehicle service of the K pieces of 65B data, where each slot on the physical interface transmits K pieces of 65B data each time, and K is a positive integer.

In a possible manner, if a first bandwidth that is of the physical interface and that is used by the decapsulation processing module to receive the ATU is smaller than a second bandwidth that is of the physical interface and that is used by the encapsulation processing module to send an encapsulated ATU, the control module is configured to: determine, based on the first bandwidth of the physical interface, that X pieces of 65B data are transmitted by each slot, and determine, based on the second physical interface, that Y pieces of 65B data are transmitted by each slot, where Z=X-Y, and X and Y are positive integers. The encapsulation processing module is specifically configured to: if Z is an integer less than 0, add Z pieces of invalid data IDLE to a slot payload that does not carry data, and perform encapsulation to obtain an encapsulated ATU; or if Z is an integer greater than 0, delete IDLE from Z slot payloads, and perform encapsulation to obtain an encapsulated ATU.

In a possible manner, the control module is further configured to insert an operations, administration, and maintenance OAM message between multiframes that are formed by ATUs and that are sent by the encapsulation processing module, where the OAM message carries all OAM content used for bus link monitoring.

The OAM message carries a BAS basic OAM message, namely, a BAS message, and an OAM message for protection switching, namely, an APS message.

According to a third aspect, an embodiment of this application provides an in-vehicle communication method. The method includes: receiving, through a physical interface of a bus, an ASN transport unit ATU sent by another gateway, and decapsulating the ATU based on a physical layer coding rule that adapts to the bus to obtain data, where the physical interface is an interface divided based on a slot rule; correspondingly switching, to a to-be-encapsulated ATU, data part that is in the data and that is to be sent to another gateway; and encapsulating the to-be-encapsulated ATU based on the physical layer coding rule that adapts to the bus to obtain an encapsulated ATU; and sending, through the physical interface, the encapsulated ATU to a gateway connected to a current gateway.

In a possible manner, the physical interface divided based on the slot rule is a physical interface whose bandwidth is divided based on a slot quantity that is determined based on the bandwidth of the physical interface of the bus, an overhead of an encapsulation unit, and a minimum bandwidth granularity for carrying a service.

In a possible manner, the sending, through the physical interface, the encapsulated ATU to a gateway connected to a current gateway includes: sending, through a slot on the physical interface, an ATU included in a multiframe to the gateway connected to the current gateway, where a quantity of ATUs in the multiframe is determined based on the bandwidth of the physical interface.

In a possible manner, the ATU includes multiple ASN packet data units APDUs, and the APDU is formed by an overhead OH and a slot payload that carries data. Data carried by each slot payload corresponds to an in-vehicle service, and the data is transmitted through a slot that is on the physical interface and that corresponds to the in-vehicle service corresponding to the data. The OH is formed by a reserved part, a multiframe indication, message content, a type indication, and a cyclic redundancy check code, where the multiframe indication indicates a sequence number of an ATU corresponding to an APDU to which the OH belongs in the multiframe, the message content is used to carry message data, and the type indication indicates content carried in the reserved part.

In a possible manner, the bus is an Ethernet bus, and the ATU further includes a byte preamble, an end-of-frame delimiter EFD, and an interframe gap IPG. In a possible manner, the method further includes: decapsulating a received first ATU to obtain at least one piece of first data, where the first data is data carried by one slot payload; obtaining an ingress service identifier based on an in-vehicle service corresponding to the first data; determining a corresponding egress service identifier based on the ingress service identifier; switching first data part that is in the first data and that is to be to another gateway to a corresponding slot payload in a to-be-encapsulated ATU indicated by the egress service identifier corresponding to the first data, to obtain second data; and encapsulating the second data in the to-be-encapsulated ATU based on the physical layer coding rule to obtain a second ATU, and sending, through a slot that is on the physical interface and that corresponds to an in-vehicle service corresponding to each piece of second data, the second ATU to the gateway connected to the current gateway.

In a possible manner, after the decapsulating a received first ATU to obtain at least one piece of first data, the method further includes: if it is determined, based on the ingress service identifier obtained based on the in-vehicle service corresponding to the first data, that multiple pieces of first data are data to be used by the current gateway, sending the multiple pieces of first data to an in-vehicle service node, a controller, or an in-vehicle networked terminal connected to the current gateway.

In a possible manner, after the switching first data part that is in the first data and that is to be sent to another gateway to a corresponding slot payload in a to-be-encapsulated ATU indicated by the egress service identifier corresponding to the first data, to obtain second data, the method further includes: if third data sent by one or more of the in-vehicle service node, the controller, or the in-vehicle networked terminal connected to the current gateway is received, and a slot payload corresponding to an in-vehicle service corresponding to the third data in the to-be-encapsulated ATU does not carry data, adding the third data to the slot payload corresponding to the in-vehicle service of the third data, where each piece of third data is carried by one slot payload; encapsulating, based on the physical layer coding rule, the to-be-encapsulated ATU that carries the second data and the third data to obtain a third ATU; and sending the third ATU to the gateway connected to the current gateway.

In a possible manner, after the decapsulating a received first ATU to obtain at least one piece of first data, the method further includes: if it is determined, based on the ingress service identifier obtained based on the in-vehicle service corresponding to the first data, that multiple pieces of first data are data to be used by the current gateway, aggregating first data part that is in the first data and that needs to be reassembled into a packet; and caching first data part that is in the multiple pieces of first data and that does not need to be reassembled into a packet; and when the packet is obtained through reassembly, sending, together with the packet, first data part that is in the cached first data and that corresponds to a same in-vehicle service as the packet to an in-vehicle service node, a controller, or an in-vehicle networked terminal corresponding to the in-vehicle service.

In a possible manner, the method further includes: adding K pieces of 65B data corresponding to a same service to a slot payload corresponding to an in-vehicle service of the K pieces of 65B data, where each slot on the physical interface transmits K pieces of 65B data each time, and K is a positive integer.

In a possible manner, the method further includes: if a first bandwidth that is of the physical interface and that is used to receive the ATU is smaller than a second bandwidth that is of the physical interface and that is used to send an encapsulated ATU; and it is determined, based on the first bandwidth of the physical interface, that X pieces of 65B data are transmitted by each slot, and it is determined, based on the second physical interface, that Y pieces of 65B data are transmitted by each slot, where Z=X-Y, and X and Y are positive integers; and if Z is an integer less than 0, adding Z pieces of invalid data IDLE to a slot payload that does not carry data, and performing encapsulation to obtain an encapsulated ATU; or if Z is an integer greater than 0, deleting IDLE from Z slot payloads, and performing encapsulation to obtain an encapsulated ATU.

In a possible manner, after the sending, through the physical interface, the encapsulated ATU to a gateway connected to a current gateway, the method further includes: inserting an operations, administration, and maintenance OAM message between sent multiframes that are formed by ATUs, where the OAM message carries all OAM content used for bus link monitoring.

According to a fourth aspect, an embodiment of this application provides a terminal device, where the terminal device includes a processor and a memory.

The memory is configured to store computer instructions, and when the processor executes the computer instructions, the terminal device is enabled to perform the method according to the third aspect.

According to a fifth aspect, an embodiment of this application provides an in-vehicle communication system, including at least one terminal device according to the fourth aspect.

It should be understood that technical solutions in the second aspect to the fifth aspect of this application are consistent with the technical solution in the first aspect of this application. Beneficial effects achieved in all aspects and corresponding feasible implementations are similar, and details are not described.

**BRIEF DESCRIPTION OF DRAWINGS**

To describe technical solutions in embodiments of this application more clearly, the following briefly describes the accompanying drawings used for describing embodiments of this application. It is clearly that the accompanying drawings in the following description show merely some embodiments of this application, and a person of ordinary skill in the art may still derive other drawings from these accompanying drawings without creative efforts.

FIG. 1 is an example of a functional block diagram of a vehicle 100 according to an embodiment of this application;
FIG. 2 is a diagram of an in-vehicle communication system according to an embodiment of the present invention;
FIG. 3 is a diagram of a structure of an ATU;
FIG. 4A and 4B are diagrams of a coding format of an ATU;
FIG. 5 is a diagram of another coding format of an ATU;
FIG. 6 is a diagram of a general format for an OH in an APDU;
FIG. 7 is a diagram of a structure of an ASN apparatus according to an embodiment of this application;
FIG. 8 is a diagram of a coding format of an OAM message;

FIG. 9 is a flowchart of an in-vehicle communication method according to an embodiment of this application;

FIG. 10 is a flowchart of an in-vehicle communication method according to an embodiment of this application;

FIG. 11 is a flowchart of an in-vehicle communication method according to an embodiment of this application;

FIG. 12 is a flowchart of an in-vehicle communication method according to an embodiment of this application; and

FIG. 13 is a flowchart of an in-vehicle communication method according to an embodiment of this application.

## DESCRIPTION OF EMBODIMENTS

With reference to accompanying drawings in embodiments of this application, the following clearly and completely describes technical solutions in embodiments of this application. It is clear that the described embodiments are some but not all of embodiments of this application. All other embodiments obtained by a person of ordinary skill in the art based on embodiments of this application without creative efforts shall fall within the protection scope of this application.

Terms such as "first" and "second" mentioned in this specification do not indicate any order, quantity, or importance, but are merely intended to distinguish between different components. Similarly, a term such as "a" or "an" does not indicate a quantity limitation, but means at least one. A term such as "connected" is not limited to a physical or mechanical connection, but may include an electrical connection, regardless of a direct or indirect connection, equivalent to a connection in a broad sense.

In embodiments of this application, a term such as "example" or "for example" is used to represent an example, an illustration, or a description. Any embodiment or design solution described as "example" or "for example" in embodiments of this application should not be explained as being superior to or more advantageous than another embodiment or design solution. Specifically, the use of the term such as "example" or "for example" is intended to present a related concept in a specific manner. In the descriptions of embodiments of this application, unless otherwise specified, "multiple" means two or more. For example, multiple processors mean two or more processors.

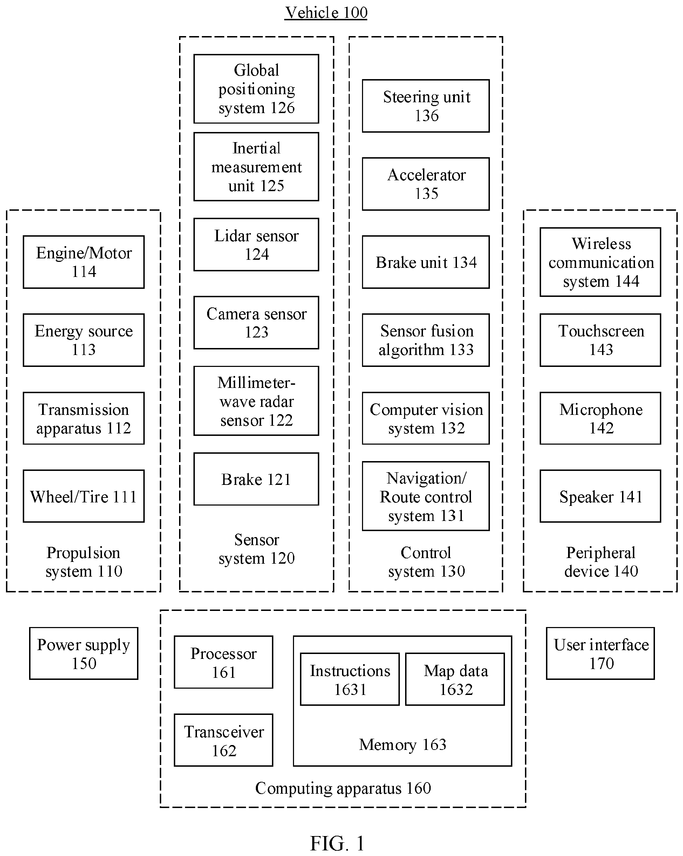

FIG. 1 is an example of a functional block diagram of a vehicle 100 according to an embodiment of this application. As shown in FIG. 1, components coupled to or included in the vehicle 100 may include a propulsion system 110, a sensor system 120, a control system 130, a peripheral device 140, a power supply 150, a computing apparatus 160, and a user interface 170. The components of the vehicle 100 may be configured to work in a manner of interconnection with each other and/or interconnection with other components coupled to various systems. For example, the power supply 150 may supply power to all components of the vehicle 100. The computing apparatus 160 may be configured to: receive data from the propulsion system 110, the sensor system 120, the control system 130, and the peripheral device 140, and control the propulsion system 110, the sensor system 120, the control system 130, and the peripheral device 140. The computing apparatus 160 may be further configured to: generate a display of an image on the user interface 170, and receive an input from the user interface 170.

It should be noted that, in another example, the vehicle 100 may include more, fewer, or different systems, and each system may include more, fewer, or different components. In addition, the shown systems and components may be combined or divided in any manner. This is not specifically limited in this application.

The computing apparatus 160 may include a processor 161, a transceiver 162, and a memory 163. The computing apparatus 160 may be a controller of the vehicle 100 or a part of the controller. The memory 163 may store instructions 1631 that are run on the processor 161, and may further store map data 1632. The processor 161 in the computing apparatus 160 may include one or more general-purpose processors and/or one or more dedicated processors (such as an image processor or a digital signal processor). If the processor 161 includes more than one processor, the processor may work independently or work in combination. The computing apparatus 160 may implement a function of controlling the vehicle 100 based on the input received through the user interface 170. The transceiver 162 is configured to perform communication between the computing apparatus 160 and each system. The memory 163 may further include one or more volatile storage components and/or one or more non-volatile storage components, such as an optical, a magnetic, and/or an organic storage apparatus. The memory 163 may be wholly or partially integrated with the processor 161. The memory 163 may include the instructions 1631 (such as program logic) that are run on the processor 161, to implement various vehicle functions, including any one of the functions or methods described in this specification.

The propulsion system 110 may provide power motion for the vehicle 100. As shown in FIG. 1, the propulsion system 110 may include an engine/motor 114, an energy source 113, a transmission (transmission) apparatus 112, and a wheel/tire 111. In addition, the propulsion system 110 may additionally or alternatively include another component other than the components shown in FIG. 1. This is not specifically limited in this application.

The sensor system 120 may include several sensors configured to sense information about an environment in which the vehicle 100 is located. As shown in FIG. 1, sensors in the sensor system 120 include a global positioning system (Global Positioning System, GPS) 126, an inertial measurement unit (Inertial Measurement Unit, IMU) 125, a lidar sensor 124, a camera sensor 123, a millimeter-wave radar sensor 122, and a brake 121 configured to modify a position and/or an orientation of a sensor. The GPS 126 may be any sensor configured to estimate a geographic location of the vehicle 100. Therefore, the GPS 126 may include a transceiver that estimates a position of the vehicle 100 relative to the earth based on satellite positioning data. In an example, the computing apparatus 160 may be configured to estimate, with reference to the map data 1632 through the GPS 126, a road on which the vehicle 100 travels. The IMU 125 may be configured to sense position and orientation changes of the vehicle 100 based on an inertial acceleration and any combination thereof. In some examples, a combination of sensors in the IMU 125 may include an accelerometer and a gyroscope. In addition, another combination of sensors in the IMU 125 is also possible. The lidar sensor 124 may be considered as an object detection system; and the sensor detects, through light sensing, an object in the environment in which the vehicle 100 is located. Usually, the lidar sensor 124 may use an optical remote sensing technology in which a distance to a target or another attribute of the target is measured by illuminating the target through light. As an example, the lidar sensor 124 may include a laser source and/or a laser scanner configured to transmit a laser pulse, and a detector configured to receive reflection of the laser pulse. For example, the lidar sensor 124 may include a laser rangefinder that uses rotation mirror reflection, and performs laser scanning in a digital scene in a one-dimensional or two-dimensional manner, to collect distance measurement values from a specified angle at intervals. In an example, the lidar sensor 124 may include a position and navigation system and components such as a light (such as a laser) source, a scanner, an optical system, an optical detector, and a receiver electronic component. The lidar sensor 124 determines a distance to an object by scanning a laser reflected from the object, and may form a 3D environmental diagram with precision up to a centimeter level. The camera sensor 123 may include any camera (such as a static camera or a video camera) configured to obtain an image of the environment in which the vehicle 100 is located. Therefore, the camera sensor 123 may be configured to detect visible light, or may be configured to detect light from another part (such as infrared light or ultraviolet light) of a spectrum. Another type of camera sensor 123 is also possible. The camera sensor 123 may be a two-dimensional detector, or may have a range detection function in a three-dimensional space. In some examples, the camera sensor 123 may be, for example, a distance detector, configured to generate a two-dimensional image indicating distances from the camera sensor 123 to several points in the environment. For this purpose, the camera sensor 123 may use one or more distance detection technologies. For example, the camera sensor 123 may be configured to use a structured light technology. The vehicle 100 illuminates an object in an environment by using a predetermined light pattern, such as a grid or checkerboard pattern, and detects reflection of the predetermined light pattern from the object by using the camera sensor 123. Based on distortion in a reflected light pattern, the vehicle 100 may be configured to detect a distance to a point on the object. The predetermined light pattern may include the infrared light or light of another wavelength. The millimeter-wave radar (Millimeter-Wave Radar) sensor 122 is usually an object detection sensor with a wavelength of 1 mm to 10 mm and a frequency range of approximately 10 GHz to 200 GHz. A measurement value of the millimeter-wave radar sensor 122 includes depth information that can provide a distance to a target. In addition, the millimeter-wave radar sensor 122 feature obvious Doppler effect, and is very sensitive to a speed. Therefore, a speed of the target may be directly obtained, and the speed of the target can be extracted by detecting a Doppler frequency shift of the target. Currently, two major frequency bands used by an in-vehicle millimeter-wave radar are 24 GHz and 77 GHz. A wavelength of the 24 GHz frequency band is about 1.25 cm and is mainly used for short-distance sensing such as parking assistance, lane change assistance, and sensing a surrounding environment of a vehicle and a blind spot. A wavelength of the 77 GHz frequency band is about 4 mm and is used for medium- and long-distance measurement such as automatic following, adaptive cruise control (ACC), and automatic emergency braking (AEB).

The sensor system 120 may also include additional sensors such as sensors that monitor an internal system of the vehicle 100 (for example, an O2 monitor, a fuel gauge, and an engine oil thermometer). The sensor system 120 may further include another sensor. This is not specifically limited in this application.

The control system 130 may be configured to control operations of the vehicle 100 and the components of the vehicle 100. Therefore, the control system 130 may include a steering unit 136, an accelerator 135, a brake unit 134, a sensor fusion algorithm 133, a computer vision system 132, and a navigation/route control system 131. The control system 130 may additionally or alternatively include another component other than the components shown in FIG. 1. This is not specifically limited in this application.

The peripheral device 140 may be configured to allow the vehicle 100 to interact with an external sensor, another vehicle, and/or a user. Therefore, the peripheral device 140 may include, for example, a wireless communication system 144, a touchscreen 143, a microphone 142, and/or a speaker 141. The peripheral device 140 may additionally or alternatively include another component other than the components shown in FIG. 1. This is not specifically limited in this application.

The power supply 150 may be configured to supply power to some or all of the components of the vehicle 100. Therefore, the power supply 150 may include, for example, a rechargeable lithium-ion battery or a lead-acid battery. In some examples, one or more battery strings may be configured to supply power. Other power materials and configurations are also possible. In some examples, the power supply 150 and the energy source 113 may be implemented together, as in some all-electric vehicles.

The components of the vehicle 100 may be configured to work in a manner of interconnection with other components inside and/or outside their respective systems. Therefore, the components and systems of the vehicle 100 may be communicatively linked together through a system bus, a network, and/or another connection mechanism.

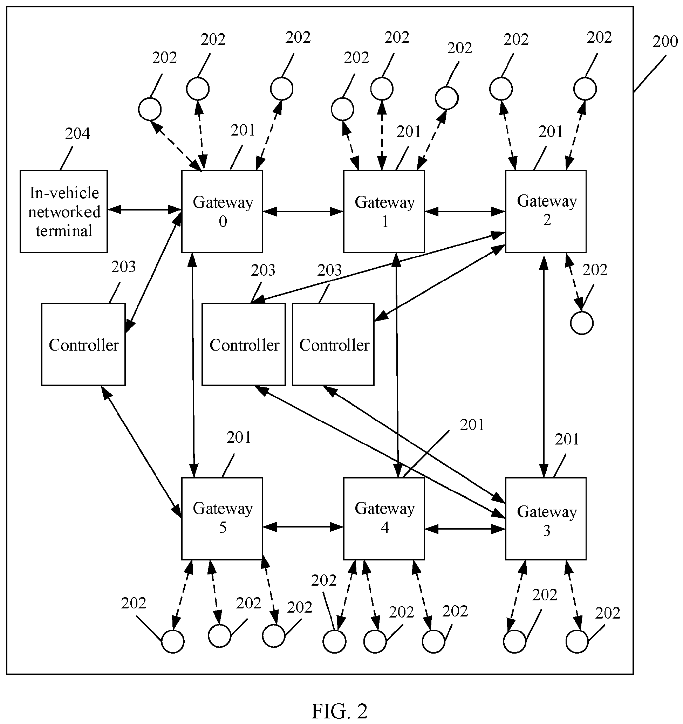

An embodiment of this application provides a system that can be applied to the vehicle 100. FIG. 2 is a diagram of an in-vehicle communication system according to an embodiment of the present invention. As shown in FIG. 2, the system 200 is an in-vehicle system in a scenario, and includes a gateway 201, an in-vehicle service node 202, a controller 203, and an in-vehicle networked terminal 204.

Multiple gateways (Gateway, GW) 201 connected through a bus, as shown in FIG. 2, are respectively recorded as gateways 0 to 5. An ASN apparatus 2011 is disposed in each gateway 201. The ASN apparatus sends data in an ATU to one or more of the in-vehicle service node 202, the controller 203, or the in-vehicle networked terminal 204 through a physical interface that is on the gateway and that is divided based on a slot rule; or transmits an ATU to another gateway connected to the gateway. The ATU is obtained by encapsulating data of each in-vehicle service based on a physical layer coding rule that adapts to the bus interconnected with the gateway. The data may be service data, control data, monitoring data, indication data, or the like.

The physical layer coding rule for the ATU varies based on a different bus. However, for any bus, the ATU includes a part used to carry data and a part used to carry an overhead. The part used to carry data is defined as a slot payload, and the part used to carry an overhead is defined as an OH. For example, when the bus is an Ethernet bus, a 10 GE Ethernet bus may be 10GBASE-T1. Parts of the ATU, except the slot payload and the OH, can be defined based on a coding format in IEEE 802.3. By analogy, a physical layer coding rule for another bus can be obtained.

The in-vehicle communication system includes many in-vehicle services, such as an entertainment service, in-vehicle control, video surveillance, and vehicle positioning. Data transmission of these in-vehicle services over the bus based on interconnected gateways, in-vehicle service nodes, controllers, or in-vehicle networked terminals, so as to provide support for a user to drive a vehicle.

In a conventional technology, all data is forwarded through a complete packet, and a gating cycle of each queue needs to be long enough to ensure that a longest packet can be sent. This results in a relatively long delay. In addition, this data transmission manner is affected by factors, such as a gating queue orchestration algorithm and packet length alignment. Consequently, bandwidth utilization is low. An in-vehicle service features a simple service type, sometimes a small amount of service data, or the like. Therefore, the foregoing technology is more disadvantageous when a relatively short packet is transmitted. In order to reduce a delay and improve bandwidth utilization, this application provides an in-vehicle communication system. In this system, an ASN apparatus is disposed in each gateway. The ASN apparatus sends data in an ATU to one or more of an in-vehicle service node, a controller, or an in-vehicle networked terminal through a physical interface that is divided based on a slot rule and that is on a gateway in which the ASN apparatus is disposed; or transmits an ATU to another gateway connected to the gateway. In different in-vehicle communication systems, an ASN is configured between gateways. ASNs perform ATU encapsulation and decapsulation based on a same physical layer coding rule that adapts to a bus. Therefore, transmission is performed between gateways by using the ATU. However, data may be directly transmitted between a gateway and an in-vehicle service node, a controller, or an in-vehicle networked terminal connected to the gateway. The in-vehicle service node, the controller, or the in-vehicle networked terminal does not need to perform ATU encapsulation or decapsulation.

The in-vehicle service node 202 connected to the gateway is configured to receive data sent by the gateway, or send service data or other request data of the in-vehicle service node 202 to the gateway. The in-vehicle service node 202 may be an in-vehicle camera, a radar, or audio. Data sent by the in-vehicle service node 202 may be a frame of image, obstacle warning data, voice information, or the like. Data received by the in-vehicle service node 202 may be an indication message indicating that another gateway needs to invoke specific data, or may be specific data to be used by the in-vehicle service node 202 for adjusting or monitoring the in-vehicle service node 202.

The controller 203 connected to the gateway is configured to receive data sent by the gateway or send control data or other data of the controller 203 to the gateway. The controller 203 may be a domain controller, such as a mobile data center (Mobile Data Center, MDC) controller, which mainly serves for intelligent driving. The core is to process a large amount of raw data detected by a front-end sensor, and send control instructions to a back-end vehicle control domain after steps such as sensing, fusion, and planning. The vehicle control domain controller (Vehicle Domain Controller, VDC) is mainly configured to receive the control instructions sent by the MDC to control vehicle acceleration, deceleration, steering, braking, or the like. A cockpit domain controller (Cockpit Domain Controller, CDC) mainly integrates related information of an original entertainment system (an in-vehicle infotainment), an instrument, an air conditioner controller, or the like in a human-computer interaction field in a cockpit. Data received by the controller 203 may be an indication message indicating that another gateway needs to invoke specific data, or may be specific data requested by the controller 203 for control of the controller 203. Control data sent by the controller 203 may include specific service data about intelligent driving, data about whether the vehicle needs to be accelerated or decelerated, or the like.

The in-vehicle networked terminal (Telematics Box, TBOX) 204 connected to the gateway is configured to receive data sent by the gateway or send, to the gateway, related data of services such as travel data collection, remote query and control, and fault monitoring that are performed by the in-vehicle networked terminal 204 for vehicle driving. In this embodiment of this application, as shown in FIG. 2, each gateway 201 is connected to another gateway in series, and is connected to multiple in-vehicle service nodes 202 nearby, to transmit data to be received or sent by the in-vehicle service node 202 such as a camera, audio, a radar, or a lidar. The gateway 201 is connected to the controller 203 of each domain and the TBOX 204. Gateways 201 are interconnected through the bus. For example, the gateways 201 may be interconnected through the Ethernet bus, as shown by a solid arrow in FIG. 2.

It is assumed that the gateways 201 are interconnected through the Ethernet bus. In this case, when the gateway 201 is also connected to another low-speed CAN bus or LIN bus, as shown by a dashed arrow in FIG. 2, related data sent from a controller on the CAN bus or LIN bus to the gateway needs to be converted into a format of data that can be transmitted by the Ethernet bus through the physical interface divided based on the slot rule, and then is transmitted. The slot division rule and an amount of data carried by each slot on the physical interface are described below by using an example.

It should be noted that FIG. 2 shows merely a data transmission form in which gateways are connected in series in an in-vehicle communication system. This application may be applied to another in-vehicle communication system that uses a data transmission form such as a star structure. This is not limited.

In this embodiment of this application, data of different in-vehicle services comes from different in-vehicle service nodes, controllers, or in-vehicle networked terminals. The data is encapsulated into an ATU by an ASN in a gateway, and is transmitted between gateways. The ATU is obtained by encapsulating data of each in-vehicle service based on the physical layer coding rule that adapts to the bus. Therefore, the ATU can be transmitted at a physical layer of the bus. This greatly improves a transmission speed and reduces a delay.

The ATU is transmitted through the physical interface that is on the gateway and that is divided based on the slot rule. The physical interface is divided into multiple slots based on the slot rule. Each slot corresponds to an in-vehicle service, and is used to transmit data that is in the ATU and that corresponds to the in-vehicle service. Therefore, this can ensure that each in-vehicle service is transmitted by a slot corresponding to the in-vehicle service, and greatly improves bandwidth utilization.

In this embodiment of this application, as shown in FIG. 2, the following transmission process is used as an example for description: The gateways in the in-vehicle communication system are interconnected through the Ethernet bus; and a gateway 1 receives an ATU sent by a gateway 2, decapsulates the ATU, re-encapsulates, into a new ATU, data to be sent by an in-vehicle service node 202 or a controller 203 that is connected to the gateway 1 together with original data that is in a decapsulated ATU and that is to be further transmitted, and sends the new ATU to the gateway 0.

It should be noted that, each gateway 201 receives or sends an ATU through the physical interface divided based on the slot rule. The physical interface divided based on the slot rule is a physical interface whose bandwidth is divided based on a slot quantity that is determined based on the bandwidth of the physical interface of the bus, an overhead of an encapsulation unit, and a minimum bandwidth granularity for carrying a service.

In some embodiments, the bandwidth of the physical interface is represented by Qw measured in Gbit/s, and the bandwidth of the physical interface indicates a payload overhead obtained after various overheads such as encapsulation overheads are excluded. For example, a bandwidth of a physical interface connected to an Ethernet bus indicates a payload overhead excluding a coding overhead and an FEC overhead. Bandwidths of the physical interface of the Ethernet bus may be 1 GE, 2.5 GE, 5 GE, 10 GE, and the like according to IEEE standards. In this embodiment of this application, an example in which the bandwidth of the physical interface of the Ethernet bus is 10 GE is used to describe how to divide the physical interface into P slots, so that to-be-transmitted data of each in-vehicle service is transmitted by a corresponding slot.

In the in-vehicle communication system, it is assumed that the minimum bandwidth granularity for carrying a service is represented by Ni measured in Mbit/s, that is, a bandwidth granularity for each slot obtained through division is represented by Ni measured in Mbit/s; the overhead of the encapsulation unit is represented by Mo%; and the slot quantity is represented by P. In this case, the following is defined:

$$P = Qw * (100\% - Mo\%) * 1000 / Ni.$$

1000 is determined based on a conversion relationship between a unit Gbit/s for the bandwidth of the physical interface and a unit Mbit/s for the minimum bandwidth granularity for carrying a service, that is, 1 Gbit/s=1,000 Mbit/s.

If the physical interface is a 10 GE Ethernet interface, that is, Qw=10; the overhead of the encapsulation unit is defined as 4%; and the minimum bandwidth granularity for carrying a service is defined as 10 Mbit/s (that is, Ni=10), the following is obtained:

$$P=10*(100\%–4\%)*1000/10=960.$$

In this case, the physical interface divided based on the slot rule is a physical interface that is divided into 960 slots, where each slot can transmit data of a specific in-vehicle service, and different slots may transmit data of one or more specific in-vehicle services.

When different bandwidths are used on the physical interface, the slot quantity obtained through division can still be calculated by using the foregoing formula. For example, the physical interface is a 1 GE Ethernet interface, that is, Qw=1; the overhead of the encapsulation unit is defined as 4%; and the minimum bandwidth granularity for carrying a service is defined as 2 Mbit/s (that is, Ni=2). The following is obtained:

$$P=1*(100\%–4\%)*1000/2=480.$$

In this case, the physical interface divided based on the slot rule is an interface that is divided into 480 slots.

It can be learned from the foregoing examples that in actual application, slot division of the interface varies based on a different bandwidth of the interface, a different overhead of the encapsulation unit, and a different minimum bandwidth granularity for carrying a service. In different application scenarios of the in-vehicle communication system, the slot quantity may be flexibly calculated based on the slot rule and parameters such as an actual bandwidth, and the bandwidth of the interface is divided based on the slot quantity. Then, data is transmitted through a slot. Details are not described herein.

In the in-vehicle communication system, the interface is divided based on the slot quantity. Each slot corresponds to an in-vehicle service, and data of the in-vehicle service is transmitted by the corresponding slot. Each slot is allocated with a corresponding in-vehicle service to be carried. For an in-vehicle service corresponding to a relatively small amount of data, only one slot may be allocated for corresponding transmission. For an in-vehicle service corresponding to a relatively large amount of data, multiple slots may be allocated to transmit data of the service. In this way, a bandwidth can be fully utilized. By contrast, in a conventional technology, data of each in-vehicle service is encapsulated into a packet. Due to a service difference, a length of a packet into which data is encapsulated differs each time. When a packet with a short length is transmitted, a problem of low bandwidth utilization occurs due to factors such as a gating queue orchestration algorithm, packet length alignment, and a guard band. In addition, the physical interface is divided based on a slot. A corresponding physical layer link also transmits data through different slots obtained based on such slot division, which is equivalent to a case in which the physical layer link is divided into different channels. Therefore, different services in in-vehicle services can be absolutely isolated, and transmission can be performed without mutual interference. For example, hard isolation can be implemented among the following three planes: in-vehicle control, video surveillance, and entertainment. In addition, for example, if the Ethernet bus is used, data can be transmitted at the physical layer. In other words, the data can be carried on electrical ports of various rates defined in a current IEEE 802.3 standard, such as 100BASE-T1, 1000BASE-T1, and 10GBASE-T1, which is more suitable for data transmission in an in-vehicle communication system.

In addition, in this embodiment of the present invention, each of the foregoing slots obtained through division is to be used to correspondingly transmit data of a specific in-vehicle service in a quick and accurate manner. Moreover, service data transmitted between gateways needs to be encapsulated in an ATU for transmission. Each ATU includes multiple slot payloads used to carry data corresponding to different in-vehicle services. Each of the slot payloads may carry data of an in-vehicle service. Data that is of an in-vehicle service and that is to be carried may be carried by one or more slot payloads for transmission based on a bandwidth required by the data. Generally, a quantity of slot payloads allocated to carry data matches a bandwidth required by a service to be carried by the slot payloads. For example, data of a reversing image service requires a bandwidth, namely, a transmission rate, of 100 Mbit/s. For a physical interface with a 10 GE bandwidth, it can be calculated that 10 slots need to be allocated for transmission. Correspondingly, 10 slot payloads in the ATU are required to carry the reversing image service. In this way, after being encapsulated in an ATU, data of a same service can be transmitted through a slot corresponding to the service, to implement fast transmission.

It should be noted that an ATU is transmitted through the physical layer. Therefore, the ATU needs to be encapsulated during encapsulation by matching a physical layer coding rule, so that data corresponding to a service is transmitted directly through the physical layer. In this way, the data corresponding to the service is fast transmitted between different gateways 201, in-vehicle service nodes 202, controllers 203, or in-vehicle networked terminals 204. Transmission of an ATU through the physical layer greatly improves a transmission speed and can significantly reduce a delay and a jitter in data transmission.

The physical layer coding rule varies based on a different bus. In this embodiment of this application, the physical layer coding rule of the Ethernet bus is used to describe an encapsulation format of an ATU. If the ATU needs to be transmitted through another bus, same transmission effect can be achieved by using an APDU defined in this application and slightly adjusting the encapsulation format based on a physical layer coding rule corresponding to the another bus.

In some embodiments, in order to facilitate mapping of data of various services to slots obtained through interface division and implement transparent transmission at the physical layer, data transmitted between gateways 201 and between the gateway 201 and each of the in-vehicle service node 202, the controller 203, and the in-vehicle networked terminal 204 is encoded and encapsulated based on the physical layer coding rule at the physical layer. An encapsulation format is defined as follows:

The APDU, a byte preamble, an end-of-frame delimiter, and an interframe gap are encapsulated to obtain the ATU, where the APDU includes an OH and a slot payload (slot). A quantity of slot payloads carrying data in each APDU is defined as 96. The slot payload is a minimum unit for carrying data in the APDU. One slot payload is one slot unit. Each slot payload may carry K 65B code blocks. Data that can be carried by one slot payload is recorded as a code group (Block Group K, BG K), and K is a positive integer.

It should be noted that, in order to ensure that there is no waiting delay for bit width conversion in a process of data switching from input to output when the ATU is transmitted on the physical interface, each of P defined slots on the physical interface also transmits K pieces of 65B data each time. In a process of switching the carried and transmitted data on the gateway, the data may also be switched at a granularity of K pieces of 65B data carried by each slot payload.

In the in-vehicle communication system, a large amount of data transmitted through a bus such as CAN or LIN bus is small in size, and a length of an obtained packet is also short. For example, in this embodiment of this application, some in-vehicle service nodes are connected to the gateway through the CAN bus or the LIN bus. In a mobile bearer network (Slicing Packet Network, SPN), a quantity of code groups BGs carried by a slot payload is fixed to 8. By contrast, a carrying granularity supported in this embodiment of this application may take a value of any integer from 1 to 8, which is more flexible. When a small amount of service data needs to be carried, K may take a value of 1 or 2. In this case, a quantity of code groups carried by a slot payload is small. This can improve bandwidth utilization in a more efficient manner, and greatly reduce a delay in waiting for service encapsulation. Therefore, an ATU encapsulation method provided in this embodiment of the present invention is more advantageous in in-vehicle communication.

Data transmitted through another bus is not necessarily 65B in size. In order to ensure that the data can be carried by a slot payload in the APDU and can match a service corresponding to the data on the interface, so as to be transmitted by a slot obtained through division, received data that uses another coding scheme needs to be uniformly transcoded into 65B in size.

In an in-vehicle Ethernet, data received by a gateway may be obtained by using a 64 b/66 b or 8 b/10 b coding scheme. To adapt to transmission in a slot obtained through bandwidth division, the data needs to be uniformly transcoded into 66B in size. For example, a coding format of data sent through the CAN bus and the LIN bus can be first converted into a 66 b coding format of a standard Ethernet. Then, synchronization header compression is performed to convert the data into compressed code blocks that use a 65B coding format. A specific conversion method is not described in detail herein.

The 65B compressed code blocks obtained through conversion may be determined as compressed code blocks obtained by performing rate adaptation. In these code blocks, K 65B code blocks of a same service may be allocated to a slot payload corresponding to the service, encapsulated into an ATU, and then transmitted through a slot corresponding to the service.

When 96 slot payloads in an APDU are transmitted through an Ethernet bus with different bandwidths, a quantity of slots on a physical interface of the Ethernet bus varies. For example, the 10 GE physical interface in the foregoing example is divided into 960 slots. In order to ensure that no transmission resource is wasted, it can be defined that an ATU forming a multiframe is transmitted on the physical interface each time. A quantity of ATUs in the multiframe is determined based on the bandwidth of the physical interface.

For example, when the APDU is carried over a physical layer with a 10 GE bandwidth for transmission, the interface is divided into 960 slots for a corresponding service to carry data. One APDU includes 96 slots. Therefore, it may be determined that 10 APDUs may form a complete multiplexing cycle.

When APDUs are carried by physical layer structures of different rates, APDU structural consistency can be basically ensured. Therefore, it may be defined that 40 APDUs form a multiframe and are transmitted at a 10 Gbit/s physical layer.

Similarly, when the APDU is carried over a 25 GE physical layer, the interface is divided into 2400 slots for a corresponding service to carry data. The APDU always includes 96 slots. Therefore, it may be determined that 25 APDUs may form a complete multiplexing cycle. Four multiplexing cycles are defined. In other words, 100 APDUs form a multiframe.

When the APDU is carried over a 1 GE physical layer, the interface is divided into 96 slots for a corresponding service to carry data. The APDU always includes 96 slots. Therefore, it may be determined that one APDU forms a complete multiplexing cycle. Four multiplexing cycles are defined. In other words, four APDUs form a multiframe.

In this embodiment of this application, data carried by 96 slots is encapsulated into one APDU. Then, a quantity of APDUs in a multiframe is adjusted based on an actual condition of the Ethernet over which the APDU is carried during transmission when a basic APDU encapsulation format remains unchanged. In this way, ATU transmission flexibly adapts to physical layer links of various rates. Therefore, flexible adaptation and compatibility are implemented by using a simple multiframe variable to correspond to various bandwidth rates.

Another part of the APDU is an OH. The OH includes a reserved part, a multiframe indication, a type indication, and a cyclic redundancy check code. The multiframe indication indicates a sequence number of an APDU corresponding to the OH in a multiframe, a quantity of APDUs in the multiframe is determined based on the bandwidth of the interface, and the type indication indicates content carried in the reserved part.

In order to ensure that a length of an encapsulated ATU is fixed, it is defined that an APDU in each ATU includes 96 slot payloads.

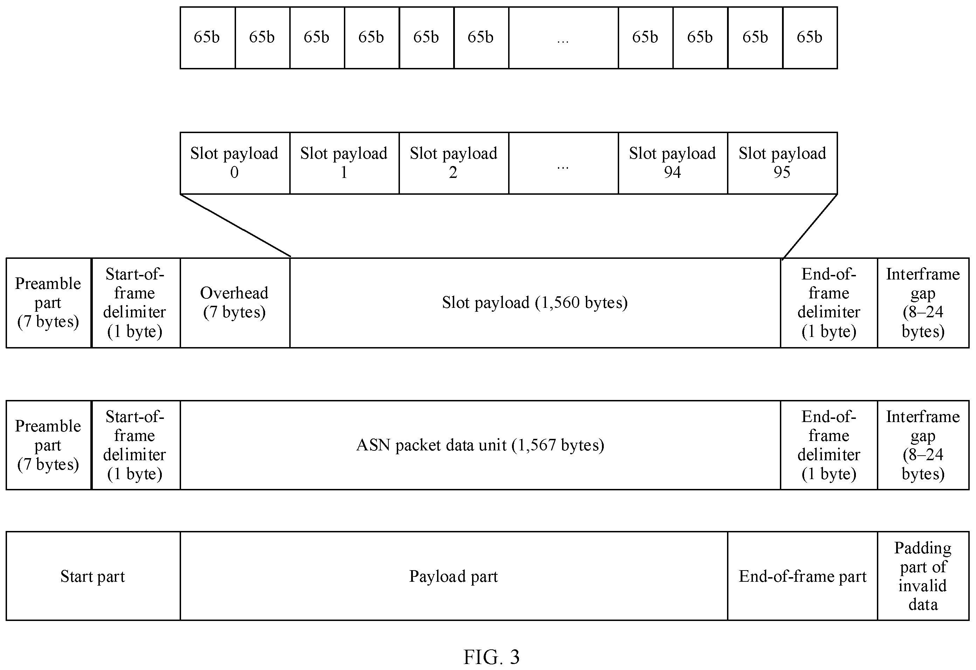

In some embodiments, for example, a bandwidth of an Ethernet physical interface for the gateway 201, the in-vehicle service node 202, the controller 203, and the in-vehicle networked terminal 204 is 10 GE. It is assumed that an encapsulation overhead is 4%, a minimum bandwidth granularity for carrying a service is 10 Mbit/s, and each slot payload carries two code blocks BGs. The two code blocks, namely, one slot, correspond to data of one service. FIG. 3 is a diagram of a structure of an ATU. As shown in FIG. 3, before an ATU transmitted at a physical layer is decapsulated, it can be only determined that the ATU includes an S code, a D code, a T code, and an I code. To be specific, the S code indicates a start part, the D code indicates a payload part, the T code indicates an end-of-frame part, and the I code indicates a padding part of invalid data IDLE.

After decapsulation, encapsulation and encoding are performed based on a corresponding IEEE 802.3 physical layer coding rule, to obtain the following parts: The S code corresponds to an 8-byte preamble, including a 7-byte preamble part preamble and a 1-byte start-of-frame delimiter (Start-of-Frame Delimiter, SFD). The 8-byte preamble is mainly used to remind and notify a gateway and another receiving node to prepare for receiving a new ATU. The D code and a first half of the T code correspond to an APDU, including data carried by 96 slot payloads and a 7-byte overhead OH, that is, an encapsulation overhead. A latter part of the T code corresponds to an EFD, and the I code corresponds to the padding part of invalid data IDLE. Further, there is an IPG of 8 to 24 bytes between each T code and each S code. All the foregoing parts constitute a complete ATU.

Based on a definition of the ATU in this embodiment of this application, there are 96 slot payloads. Each slot payload carries data of two code blocks BGs. The 96 slot payloads carry a total of 96*2*65=12,480 bits=1,560 bytes of data, and the overhead OH is 7 bytes.

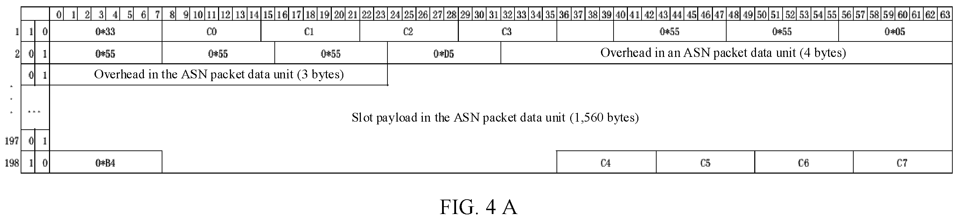

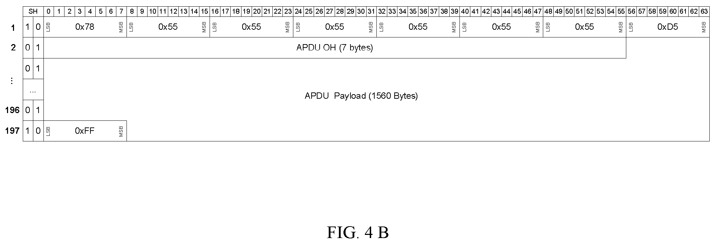

The slot payload and the overhead OH in the APDU newly defined in the ATU are encapsulated based on a physical layer coding requirement of a bearer link. Therefore, an encapsulated ATU can be transmitted at the physical layer. FIG. 4A and 4B are diagrams of a coding format of an ATU. Specifically, it is defined that a format obtained after the ATU is encapsulated is shown in FIG. 4A.

The format includes 2-bit synchronization headers SHs (first two bits in each of total 197 rows), an 8-bit start-of-frame delimiter (bits 0 to 7 in row 1), a 56-bit preamble (bits 8 to 63 in row 1), a 56-bit or 7-byte OH (bits 0 to 55 in row 2), a 12,480-bit or 1,560-byte slot payload (bit 56 in row 2 to bit 63 in row 197, excluding bits 0 to 7 in row 197), and an 8-bit end-of-frame delimiter (the bits 0 to 7 in row 197).

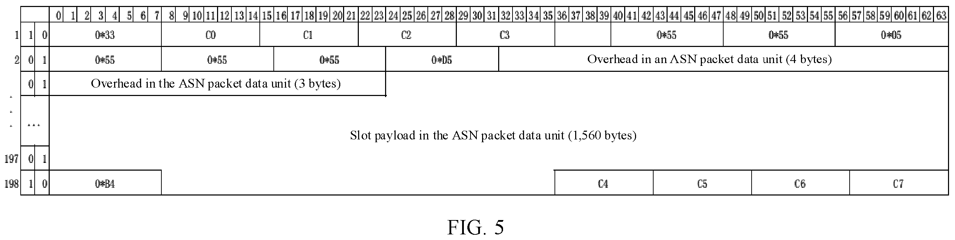

Alternatively, FIG. 5 is a diagram of another coding format of an ATU. As shown in FIG. 5, an encapsulation format is as follows:

The encapsulation format includes 2-bit synchronization headers SHs (first two bits in each of total 198 rows), a 56-bit preamble (bits 0 to 7 and bits 40 to 63 in row 1, and bits 0 to 23 in row 2), a 56-bit control word (bits 8 to 35 in row 1 and bits 36 to 63 in row 198), a 4-bit reserved field to which IDLE (bits 36 to 39 in row 1) can be added, an 8-bit start-of-frame delimiter (bits 24 to 31 in row 2), a 56-bit or 7-byte OH (bit 32 in row 2 to bit 23 in row 3), a 12,480-bit or 1,560-byte slot payload (bit 24 in row 3 to bit 25 in row 198, excluding bits 0 to 7 in row 198), and an 8-bit end-of-frame delimiter (the bits 0 to 7 in row 198).

An APDU is defined in this embodiment of this application. An S code part and a T code part in an ATU obtained through encapsulation based on a physical layer coding rule slightly differs from corresponding parts in a conventional technology. FIG. 5 shows a format obtained after the S code part and the T code part are changed. Specifically, a quantity of coded rows is increased from 197 rows in FIG. 4A to 198 rows. In this system, an ASN apparatus is disposed in each gateway. A format that is for decapsulation and encapsulation and that is shown in FIG. 4A or FIG. 5 is preconfigured in both a decapsulation processing module and an encapsulation processing module in the apparatus. Therefore, each gateway involved in data transmission may support decapsulation and encapsulation of the ATU. An ATU obtained by performing encapsulation by using each of the two formats shown in FIG. 4A and FIG. 5 can be transmitted by a corresponding service slot on an interface defined in this embodiment of this application.

The byte preamble, EFD, and IPG each are in a format required for encapsulation on the Ethernet bus. In a scenario in which another bus is used, the byte preamble, EFD, and IPG in the ATU need to be changed to adapt to a physical layer coding requirement of the another bus.

In this embodiment of the present invention, in ATUs shown in FIG. 4A and FIG. 5, content to be padded to parts such as the SFD, the EFD, and the control word may be padded with reference to a requirement of an IEEE 802.3 physical layer coding rule in a conventional technology, such as a requirement of a physical coding sublayer (Physical Coding Sublayer, PCS). Details are not described herein. For the slot payload and the overhead OH defined in this embodiment of this application, refer to this example for padding.

Each slot payload carries K pieces of 65B data, that is, data of K BGs, where K is a positive integer. Each slot payload may carry a service of an in-vehicle system, such as an intelligent cruise, a driving speed, and a reversing image. For a service that requires a relatively large data bandwidth, multiple slot payloads may be allocated to correspond to the service. For example, for a reversing image service, a data transmission rate of the service needs to be 100 Mbit/s. For a physical interface with a 10 GE bandwidth, it can be calculated that 10 slots are needed for transmission. In addition, in order to match transmission in the slots, 10 slot payloads are also needed in the APDU to carry the reversing image service. Alternatively, a quantity of needed slot payloads may be first determined based on a maximum amount of data that is to be transmitted and that is of the in-vehicle service, namely, a reversing image. Then, a same quantity of slots are correspondingly allocated for transmission. In this embodiment of this application, slots or slot payloads for transmitting in-vehicle services may be flexibly configured based on a difference between the in-vehicle services. This can maximize a data transmission speed, and reduce a transmission delay.

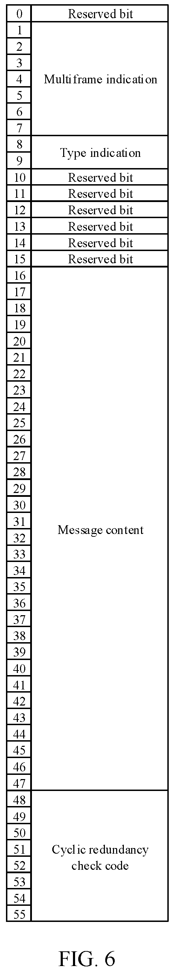

FIG. 6 is a diagram of a general format for an OH in an APDU. As shown in FIG. 6, the OH includes a reserved bit, a multiframe indication, a type indication, and a cyclic redundancy check code.

Reserved bits (Reserved bit) include bit 0 and bits 10 to 15. These bits are reserved for extension when there is a need.

The multiframe indication (Multiframe indication, MFI) includes bits 1 to 7, and indicates a sequence number of the APDU to which the OH belongs in a multiframe. A quantity of ATUs or APDUs in a multiframe can be determined based on a bandwidth of an Ethernet interface. When the APDU is carried on a 10 Gbit/s port, it is defined that one multiframe includes 40 APDUs. In this case, an MFI field in an OH of a first APDU in the multiframe is padded with 0b0000000, an MFI value in an OH of a second APDU is added by 1. By analogy, when the APDU is carried on the 10 Gbit/s port, valid MFI values range from 0b0000000 to 0b0100111, that is, 0 to 39. MFI values in other bits are reserved values for expanding a valid value range during Ethernet transmission with a larger bandwidth.

The type indication (Flag) includes bits 8 and 9, and indicates a type of a message carried in message content in bits 16 to 48. When the flag is 0b00, the message content carries a bandwidth configuration message (Bandwidth configuration). When the flag is 0b11, the message content indicates a 1588 packet carried in a synchronization message channel.

The message content includes bits 16 to 48, and is used to carry the bandwidth configuration message or the 1588 packet. The bandwidth configuration message is used to determine a bandwidth configuration condition of the Ethernet interface, and flexibly generate a proper ATU or form a multiframe based on the bandwidth configuration condition. The 1588 packet carries a gateway clock and is aligned with a 1588 protocol, so that each gateway can determine whether receiving time and sending time are consistent with those of another gateway. If there is an idle bit in the message content that carries the foregoing message or packet, a value of the idle bit is reserved.

Further, the bandwidth configuration message may be used to periodically transfer an ID of a service corresponding to each slot based on slots obtained through bandwidth division, or transfer a CRC-32 checksum of an entire slot cycle. If the CRC-32 checksum is transferred, each of receiving and sending gateways, in-vehicle service nodes, or the like may compare a received CRC-32 checksum with a checksum calculated by each of the receiving and sending gateways, the in-vehicle service nodes, and the like, so as to perform a slot reliability check.

The cyclic redundancy check (CRC) code includes bits 49 to 55. A cyclic redundancy check is a calculation method used to check digital transmission accuracy on a communication link. For a definition, refer to IEEE 802.3. In this embodiment of this application, gateways at a transmit end and a receive end agree that a high-order bit of a CRC7 result [x6:x0] is first sent, a check polynomial is $x7+x5+x4+x2+x+1$, and an initial value is 0, so as to check whether data in bits 8 to 48 is correctly transmitted.

The CRC code occupies 7 bits, but the 7 bits cannot be sent on a link at the same time. Therefore, the gateways at the receive end and the transmit end, such as the gateway 2 and the gateway 1 mentioned in this application, agree that a high-order bit is first sent, to ensure that a position of a sent bit 0 or 1 is the same as that of a received bit 0 or 1 and that same data is obtained.

The CRC may be as shown in this example. Receiving and sending gateways agree that a checksum is 5. It is assumed that data sent by the sending gateway is 101. A remainder obtained by dividing 101 by 5 is 1, and is substituted into the polynomial $x7+x5+x4+x2+x+1$ to obtain 20. In this case, if data received by a gateway at the receive end is 101, a value obtained by dividing 101 by 5 and substituting an obtained remainder into the polynomial is also 20. This indicates that the data is correctly received. If the data received by the gateway at the receive end is 102, a remainder obtained by dividing 102 by 5 is 2, and a value obtained after the remainder is substituted into the polynomial is 39, which does not equal 20. This indicates that the data is incorrectly sent, and needs to be sent again.

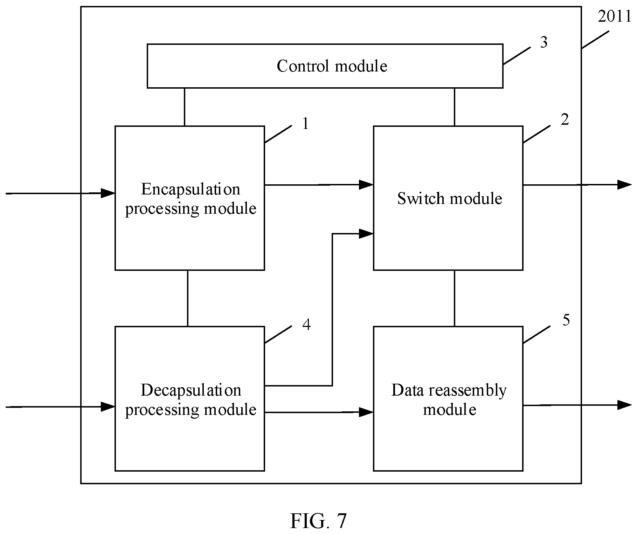

An embodiment of this application provides an ASN apparatus. The ASN apparatus is disposed in a gateway in a system provided in the foregoing embodiment. Gateways are connected through an Ethernet bus. Data transmitted by the gateway is encapsulated into an ATU based on the foregoing example. On an interface of each gateway, that transmission is performed through a slot corresponding to a service corresponding to each piece of data is used as an example for description. By analogy, another gateway connection form and transmission that is performed through another bus can be obtained. FIG. 7 is a diagram of a structure of an ASN apparatus according to an embodiment of this application. As shown in FIG. 7, an ASN apparatus 2011 includes a decapsulation processing module 4, a switch module 2, a control module 3, an encapsulation processing module 1, and a data reassembly module 5.

In this embodiment, a working process of the ASN apparatus 2011 is described by using an example in which a gateway 1 receives data transmitted by a gateway 2, some of the data needs to be reserved, some of the data needs to be forwarded to a gateway 0, and some of data of the gateway 1 also needs to be sent to the gateway 0. The working process also applies to other gateways.

In some embodiments, the gateway 2 obtains data sent by some in-vehicle service nodes, controllers, or the like. For example, the gateway 2 obtains speed data from a speed sensor, audio data from a speaker, and door/window opening/closing data from a door/window sensing service node. The encapsulation processing module 1 performs encapsulation based on a corresponding slot payload position for each piece of service data by using an ATU encapsulation format in the foregoing example, to obtain an ATU. The ATU is sent to the gateway 1 and the gateway 0 through a bus.

The decapsulation processing module 1 is configured to: receive, through a physical interface of the bus, an ASN transport unit ATU sent by another gateway, and decapsulate the ATU based on a physical layer coding rule that adapts to the bus to obtain data, where the physical interface is an interface divided based on a slot rule.

The switch module 2 is configured to correspondingly switch, to a to-be-encapsulated ATU, data part that is in the data and that is to be sent to another gateway.

The encapsulation processing processing module 1 is configured to: encapsulate the to-be-encapsulated ATU based on the physical layer coding rule that adapts to the bus to obtain an encapsulated ATU, and send, through the physical interface, the encapsulated ATU to a gateway connected to a current gateway

In some embodiments, the encapsulation processing processing module 1 is specifically configured to: send, through a slot on the physical interface, an ATU included in a multiframe to the gateway connected to the current gateway. A quantity of ATUs in the multiframe is determined based on a bandwidth of the physical interface.

Bandwidths of physical interfaces on different buses are different. However, a physical interface may be further divided in a manner of calculating a slot quantity in the foregoing example. For example, in the foregoing example, each slot correspondingly transmits data of a service, and a slot payload in the ATU correspondingly carries data of a service. For division of a physical interface, determining of a multiframe, an encapsulation format of the ATU, and an OH format, refer to the foregoing example.

In a possible implementation, the decapsulation module 1 is specifically configured to: decapsulate a received first ATU to obtain at least one piece of first data, and obtain an ingress service identifier based on an in-vehicle service corresponding to the first data, where the first data is data carried by one slot payload. The switch module 2 is specifically configured to: determine a corresponding egress service identifier based on the ingress service identifier, and switch first data part that is in the first data and that is to be sent to another gateway to a corresponding slot payload in a to-be-encapsulated ATU indicated by the egress service identifier corresponding to the first data, to obtain second data. The encapsulation processing module 4 is specifically configured to: encapsulate the second data in the to-be-encapsulated ATU based on the physical layer coding rule to obtain a second ATU, and send, through a slot that is on the physical interface and that corresponds to an in-vehicle service corresponding to each piece of second data, the second ATU to the gateway connected to the current gateway.

In a possible implementation, the control module 3 is configured to: if the decapsulation processing module determines, based on the ingress service identifier obtained based on the in-vehicle service corresponding to the first data, that multiple pieces of first data are data to be used by the current gateway, send the multiple pieces of first data to an in-vehicle service node, a controller, or an in-vehicle networked terminal connected to the current gateway.

In a possible implementation, the encapsulation processing module 1 is further configured to: if third data sent by one or more of the in-vehicle service node, the controller, or the in-vehicle networked terminal connected to the current gateway is received, and a slot payload corresponding to an in-vehicle service corresponding to the third data in the to-be-encapsulated ATU does not carry data, add the third data to the slot payload corresponding to the in-vehicle service of the third data, where each piece of third data is carried by one slot payload; encapsulate, based on the physical layer coding rule, the to-be-encapsulated ATU that carries the second data and the third data to obtain a third ATU; and send the third ATU to the gateway connected to the current gateway.

After the decapsulation processing module 1 decapsulates the first ATU, multiple pieces of first data are obtained. Some of the first data is to be used by the gateway 1. The control module 3 determines, based on the ingress service identifier, which part of the first data is required by the gateway 1; and then sends the part of first data to a connected end that needs the data, such as an in-vehicle service node, a controller, or an in-vehicle networked terminal.

The gateway 1 also has some data, namely, the third data, to be sent to and used by another gateway, in-vehicle service node, controller, or in-vehicle networked terminal. In this case, the third data may be first cached in the ASN, for example, cached in the encapsulation processing module 4. After obtaining the first data through decapsulation, the decapsulation module 1 obtains an egress service identifier based on an ingress service identifier corresponding to each piece of first data, and adds the first data to a slot payload corresponding to a service corresponding to an egress service identifier of the first data, to obtain the second data.

When encapsulating an ATU, the encapsulation processing module 4 adds the second data and the third data to a slot corresponding to a corresponding service, encapsulates the ATU based on the foregoing format, and sends an encapsulated ATU to a next gateway, namely, the gateway 0.

It is assumed that the second data and the third data belong to a same service, such as a reversing image. A slot payload of an APDU in an ATU is defined to carry two pieces of 65B data, and 10 slot payloads in the ATU are used to carry a reversing image service. However, the second data and the third data total to a size of 50 pieces of 65B data, which cannot be carried by the 10 slot payloads. In this case, the second data and the third data can be first cached, and then be added to slot payloads corresponding to the reversing image when a second ATU is encapsulated.

In some embodiments, the decapsulation processing module 1 in the gateway 1 receives an ATU sent by the gateway 0, and decapsulates the ATU based on an agreed encapsulation format such as an encapsulation format in the foregoing example, to obtain at least one piece of first data. For example, one piece of first data is speed data, one piece of first data is audio data, and another piece of first data is door/window opening/closing data.

For example, the speed data is carried in a $9^{th}$, $19^{th}$, and $29^{th}$ slot payload in the ATU; the audio data is carried in a $3^{rd}$, $13^{th}$, $23^{rd}$, $33^{rd}$, $43^{rd}$, $53^{rd}$, $63^{rd}$, $73^{rd}$, $83^{rd}$, and $93^{rd}$ slot payload in the ATU; and the door/window opening/closing data is carried in a $10^{th}$ slot payload in the ATU. Slots for transmitting the speed data, the audio data, and the door/window opening/closing data may also be located in same positions as corresponding payload slots, or a same service is evenly distributed in different slots for transmission. A correspondence between a slot payload and an in-vehicle service and a correspondence between a slot and an in-vehicle service may be configured in a slot allocation table. The slot allocation table may be pre-stored in an ASN of each gateway, so that the decapsulation module 1 and the encapsulation processing module 4 each determine, based on an in-vehicle service, positions at which data is carried and transmitted.

In the slot allocation table, a slot payload position at which data is received in the ATU may be different from a position at which the data is sent, and a corresponding slot position at which data is received may also be different from a slot position at which the data is sent. A corresponding position may be obtained based on the slot allocation table. As shown in the foregoing example, it is assumed that slot positions of the speed data are consistent with slot payload positions of the speed data in the ATU. To be specific, the slot positions indicate a $9^{th}$, $19^{th}$, $29^{th}$, $105^{th}$, $115^{th}$, and $125^{th}$ slots. It may be determined that 9, 19, 29, 105, 115, and 125 are ingress service identifiers of the speed data. Alternatively, it may be determined, based on a service type, that the ingress identifiers of the speed data are speed sensor identifiers. There is a correspondence between a position and a service that correspond to data, and both the position and the service may be used as customer identifiers to distinguish between in-vehicle services to which different data belongs. In the slot allocation table, an ingress service identifier, a service, and an egress service identifier are in a one-to-one correspondence. The customer identifier may be the foregoing slot position or slot payload position, or may be a service identifier, which is not limited to an example provided in this embodiment of this application.

In some embodiments, the switch module 2 may determine, based on an ingress service identifier of the first data, namely, a speed sensor identifier of the gateway 0, that a corresponding egress service identifier is a speed sensor identifier of the gateway 1; determine, based on a speaker identifier of the gateway 0, that a corresponding egress service identifier is a speaker identifier of the gateway 1; and determine, based on a door/window sensing service node identifier of the gateway 0, that a corresponding egress service identifier is a door/window sensing service node identifier of the gateway 1.

If the gateway 1 is to use the audio data, the audio data is sent to an in-vehicle speaker connected to the gateway 1. The speed data and the door/window opening/closing data that are not used are re-encapsulated and further sent to the gateway 0 through the bus. If the audio data is to be used by multiple gateways, the audio data is encapsulated together with the speed data and the door/window opening/closing data.

If the control module 3 determines, based on an egress service identifier, that the audio data is to be used by the gateway 1, the audio data is sent to a speaker connected to the gateway 1.

In this embodiment of this application, an example in which the audio data, the speed data, and the door/window opening/closing data need to be encapsulated together and sent to the gateway 0 is used.

The switch module 2 switches the first data to a corresponding slot payload in a to-be-encapsulated ATU indicated by the egress service identifier corresponding to the first data, to obtain the second data.

The decapsulation processing module receives the ATU from an ingress of the gateway 1, extracts data in each slot payload by performing operations such as framing, decoding, and OAM extraction, and then labels the data with an identifier of a corresponding service type based on the slot configuration table. For example, the decapsulation processing module switches the speed data to a slot payload corresponding to the speed sensor identifier of the gateway 1, switches the audio data to a slot payload corresponding to the speaker identifier of the gateway 1, and switches the door/window opening/closing data to a slot payload corresponding to the door/-window sensing service node identifier of the gateway 1. All these data switched to new positions is recorded as the second data.

The encapsulation processing module 4 is specifically configured to: encapsulate the second data in the to-be-encapsulated ATU based on the physical layer coding rule to obtain a second ATU, and send, through a slot that is on the physical interface and that corresponds to an in-vehicle service corresponding to each piece of second data, the second ATU to the gateway connected to the gateway 1.

The second data is encapsulated based on an example ATU encapsulation format provided in the foregoing embodiment, and is sent to the gateway 0. In a sending process, each piece of data is transmitted through a slot that corresponds to the data and that is obtained through interface division. For example, the audio data is transmitted through a slot corresponding to audio.

In some embodiments, when a bandwidth of 10 GE or 25 GE is used, a large quantity of slots are obtained through interface division, and there are 960 or even 2,400 slots. If each gateway searches for and matches a slot corresponding to each service one by one, tremendous computing power is required. That each gateway is equipped with such tremendous computing power imposes an excessively high configuration requirement on an in-vehicle system. Therefore, a slot allocation table may be pre-stored in each gateway. A quantity of service types in in-vehicle communication is limited. Therefore, it may be allocated that multiple slots correspond to one service type. Certainly, it needs to be ensured that slots for a service type is evenly distributed in the slot allocation table. For example, in a 10 GE Ethernet, one piece of reversing image data needs to be transmitted with a bandwidth of 100 Mbit/s. In other words, 10 slots with a bandwidth of 10 Mbit/s need to be allocated. In this case, if the slot allocation table involves 128 service types, slots carrying the reversing image need to be evenly distributed among the 960 slots obtained through division. Correspondingly, slot payloads in corresponding positions in an ATU included in a multiframe are also evenly distributed. In this way, if the reversing image data fails to be transmitted by a first slot during transmission, the data may also be transmitted by a second slot in this round of transmission. It is assumed that the service is centrally allocated to 10 consecutive or adjacent slots. Once the service data fails to be transmitted by a first slot, it is also probable that the data fails to be transmitted by another nine adjacent slots. In this case, the data needs to wait for a next round of transmission, so as to be transmitted by the slot.

The slot configuration table may be pre-stored in each gateway. The table corresponds to 128 service types. Each service type corresponds to a bandwidth required for transmitting data of a service and a slot position for transmitting the data of the service.

After a bandwidth of a physical PHY layer and a slot multiplexing cycle are determined and a service bandwidth for each user is configured, a slot arrangement sequence in the entire multiplexing cycle can be calculated based on a specific slot allocation algorithm.

An in-vehicle network features a small quantity of network nodes and fixed types of connected services. A slot configuration table is generated based on a corresponding service bandwidth and a slot position. Each gateway may perform quick configuration for encapsulated and decapsulated data by querying the slot configuration table, so that the data is quickly forwarded.

In some embodiments, the encapsulation processing module is specifically configured to add K pieces of 65B data corresponding to a same service to a slot payload corresponding to an in-vehicle service of the K pieces of 65B data. Each slot on the physical interface transmits K pieces of 65B data each time, and K is a positive integer. For the Ethernet bus, a value of K may be any integer from 1 to 8. To reduce a data transmission delay of a small in-vehicle service, the value of K may be 1 or 2.

For the gateway 1, it is assumed that a bandwidth for receiving the door/window opening/closing data is X, and a bandwidth for sending the door/window opening/closing data is Y. In order to reduce a delay, a data switch granularity specified by the switch module equals a quantity of K code blocks BGs carried by a slot payload in an ATU. For example, an example commonly used in this embodiment of this application is that K=2. A switch granularity of the switch module is two 66 B code blocks. After encapsulation, synchronization header compression is performed to obtain 65B code blocks. A switch granularity that matches the bus is used, which can ensure that there is no waiting delay for bit width conversion in a process of data switching from input to output. Therefore, a delay is reduced.

After switching is performed, due to a factor such as an Ethernet bandwidth frequency, a small quantity of code blocks may be cached in a position for sending the door/window opening/closing data. For example, only one 65B code block of door/window opening/closing data is obtained after a first time of decapsulation is performed. In this case, the code block may be cached.

After a next ATU is decapsulated to obtain a second block of door/window opening/closing data, two code blocks are both carried by a slot payload corresponding to a door/window opening/closing sensing node and are sent. This avoids an encapsulation error that occurs after switching because an idle code block is occupied by other service data or by IDLE when a slot payload that can carry two code blocks carries only one code block.

In some embodiments, a bandwidth that is of the physical interface and that is used by the gateway 1 to receive data is different from a bandwidth that is used to send the data.

If a first bandwidth that is of the physical interface and that is used by the decapsulation module 1 to receive an ATU is smaller than a second bandwidth that is of the physical interface and that is used by the encapsulation processing module to send an encapsulated ATU,

the control module 3 is configured to: determine, based on the first bandwidth of the physical interface, that X pieces of 65B data are transmitted by each slot, and determine, based on the second physical interface, that Y pieces of 65B data are transmitted by each slot, where Z=X-Y, and X and Y are positive integers.

The encapsulation processing module 1 is specifically configured to: if Z is an integer less than 0, add Z pieces of invalid data IDLE to a slot payload that does not carry data, and perform encapsulation to obtain an encapsulated ATU; or if Z is an integer greater than 0, delete IDLE from Z slot payloads, and perform encapsulation to obtain an encapsulated ATU.

If it is found that a bandwidth Y for outputting the door/window opening/closing data is larger than a bandwidth X for inputting the door/window opening/closing data, Z is a negative number. In this case, IDLE can be inserted into a slot payload in an ATU or between frames in the ATU for bandwidth adaptation. Similarly, if it is found that the bandwidth Y for outputting the door/window opening/closing data is smaller than a bandwidth X for inputting the door/window opening/closing data, Z is a positive number. In this case, IDLE in an ATU and between ATUs may be deleted to obtain an adapted bandwidth. However, it needs to be ensured that when input door/window opening/closing data is encapsulated, sufficient IDLE is padded for supplementing the bandwidth X, so as to support IDLE deletion for bandwidth adaptation.

The encapsulation processing module 1 is further configured to: if third data sent by one or more of the in-vehicle service node, the controller, or the in-vehicle networked terminal connected to the gateway 1 is received, and a slot payload corresponding to an in-vehicle service corresponding to the third data in the to-be-encapsulated ATU does not carry data, add the third data to the slot payload corresponding to the in-vehicle service of the third data, where each piece of third data is carried by one slot payload; encapsulate, based on the physical layer coding rule, a to-be-encapsulated ATU that carries the second data and the third data to obtain a third ATU; and send the third ATU to the gateway connected to the gateway 1.

If the encapsulation processing module 1 in the gateway 1 further receives temperature data sent by a seat heating sensor, the encapsulation processing module 1 may also perform encapsulation by adding, based on the foregoing encapsulation format, the third data to a slot payload corresponding to a heating sensor service. The seat heating sensor is an in-vehicle service node connected to the gateway 1. It should be noted that the temperature data obtained by the gateway 1 and the foregoing forwarded data may be encapsulated into a same ATU for transmission, or may be encapsulated into different ATUs. This is determined based on an ATU that is being processed by the encapsulation processing module when the third data is obtained, and is not limited to this example.

In some embodiments, when data to be reserved by the gateway 1 includes data that can be directly sent to each in-vehicle service node, controller, or in-vehicle networked terminal through a connected bus, and further includes data to be sent to each in-vehicle service node, controller, or in-vehicle networked terminal through a reassembled packet, the following operation may be performed:

The data reassembly module 5 is configured to: if the decapsulation module 1 determines, based on the ingress service identifier obtained based on the in-vehicle service corresponding to the first data, that multiple pieces of first data are data to be used by the gateway 1, aggregate first data part that is in the first data and that needs to be reassembled into a packet.

In some embodiments, the slot configuration table may further mark that a specific in-vehicle service is reserved for a specific gateway and is sent to an in-vehicle service node, a controller, or an in-vehicle networked terminal connected to the gateway. Moreover, the slot configuration table may further mark that specific data needs to be reassembled into a packet and be sent to an in-vehicle service node, a controller, or an in-vehicle networked terminal connected to a specific gateway, and that specific data may be directly sent.

The switch module 2 is configured to: cache first data part that is in the multiple pieces of first data and that does not need to be reassembled into a packet; and when the data reassembly module 5 obtains the packet through reassembly, send, together with the packet, first data part that is in the cached first data and that corresponds to a same in-vehicle service as the packet to an in-vehicle service node, a controller, or an in-vehicle networked terminal corresponding to the in-vehicle service.

In some embodiments, for example, the switch module 2 determines, based on a correspondence configured in the slot configuration table, that a first group of first data in the first data needs to be reassembled into a packet and be sent to a specific in-vehicle service node, a second group of first data in the first data is directly sent to the in-vehicle service node, and a third group of first data in the first data is directly sent to a specific controller. In this case, the switch module 2 may first send, to the controller corresponding to the third group of first data, the third group of first data that belongs to another in-vehicle service. Then, a priority of the second group of first data is determined based on the slot configuration table. If the priority of the second group of first data is higher than that of the first group of first data, the second group of first data may be first sent to the in-vehicle service node corresponding to the second group of first data. If the priority of the second group of first data is lower than that of the first group of first data, the second group of first data is first cached. When the data reassembly module 5 collects and aggregates the first group of first data and reassembles the first group of first data into a packet, the second group of first data and the packet are sent together to the in-vehicle service node corresponding to the second group of first data and the packet.

In some embodiments, the control module 3 is further configured to insert an operations, administration, and maintenance (Operations, Administration, and Maintenance, OAM) message between multiframes that are formed by ATUs and that are sent by the encapsulation processing module 1. The OAM message carries various OAM information for monitoring, operating, maintaining, and managing the in-vehicle communication system, such as automatic protection switching (Automatic Protection Switching, APS) information. The OAM message is generated based on a format of a 65B control code block.

In the Ethernet, for example, a series of monitoring message types and processing mechanisms are defined by ITU-T Y 1731, IEEE 802.3ah, 802.3ag, or the like. In a slicing packet network (Slicing Packet Network, SPN) and a next-generation transport network (Metro Transport Network, MTN) technology system, complete OAM messages and processing mechanisms are also defined. However, in an in-vehicle field, in-vehicle communication involves a small quantity of networking nodes and uses a fixed network. The foregoing OAM mechanism is excessively complex for an in-vehicle network, and increases a system burden. Therefore, in this embodiment of this application, content of multiple types of OAM messages is integrated into one type of OAM message. This eliminates a need for multiple types of OAM messages and a need for multiple OAM transceiving mechanisms. For example, the OAM message transmitted through the Ethernet bus is a message for monitoring the in-vehicle communication system, and is used to monitor link quality.

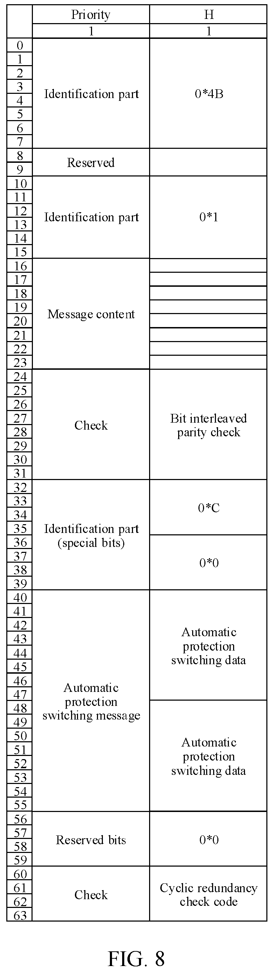

FIG. 8 is a diagram of a coding format of an OAM message. The OAM message defined in this embodiment of this application may be shown in FIG. 8.

A synchronization header occupies a first bit before bit 0, and is represented by 1.

As shown in the figure, bits 0 to 7 are 8 fixed bits used to identify that a message is the OAM message. Bits 32 to 39 are 8 special bits also used to mark that the message is the OAM message. Bits 9 to 15 are 7 bits used to identify a type of the OAM message. This embodiment of this application defines only one type of OAM message. Therefore, the 7 bits are also mainly used to identify that the message is the OAM message. Therefore, when the bits 0 to 7 take a value of 0x4B, the bits 32 to 39 take values of 0xC and 0x0, and the bits 9 to 15 take a value of 0x1, it can be identified that the message is the OAM message.

Bits 8 and 9 are reserved bits to which content can be added when message content is subsequently expanded. Bits 16 to 23 are used to store content of the OAM message. Bits 24 to 31 are used for a bit interleaved parity (Bit Interleaved Parity, BIP) check. Bits 40 to 55 indicate an automatic protection switching (Automatic Protection Switching, APS) message. For a carrying method, a bit width of the entire APS message is compressed from 4 bytes to 2 bytes based on existing APS message content. There is not much content in a monitoring message in an in-vehicle communication system. Therefore, 2 bytes are sufficient to transmit APS content. It should be noted that, that BIP and APS messages are respectively placed in bits 24 to 31 and bits 40 to 55 is merely used as an example for description. An OAM message of another type may also be carried in the OAM provided in this embodiment of this application by compressing a bit width of OAM message content of the OAM message from 4 bytes to 2 bytes and placing the OAM message in the foregoing positions, so as to perform operations, maintenance, and management on a system.

Bits 56 to 59 are reserved bits that are reserved for adding content in subsequent expansion. Bits 60 to 63 are CRC check bits, and a check manner thereof may refer to the foregoing CRC check.

It should be noted that for definitions of fields such as BIP and APS in the OAM message shown in FIG. 8, reference may also be made to a definition of other OAM content in a mobile slicing packet network of the MTN or the SPN. A specific field is not restricted and defined by a position or content shown in the figure.

In this embodiment of this application, the OAM message is redefined because an OAM mechanism of the in-vehicle communication system is simple. To be specific, content of different OAM messages in a conventional technology is integrated into one OAM message. This greatly reduces complexity of transmitting and monitoring the OAM message in the in-vehicle communication system, and reduces system overheads.

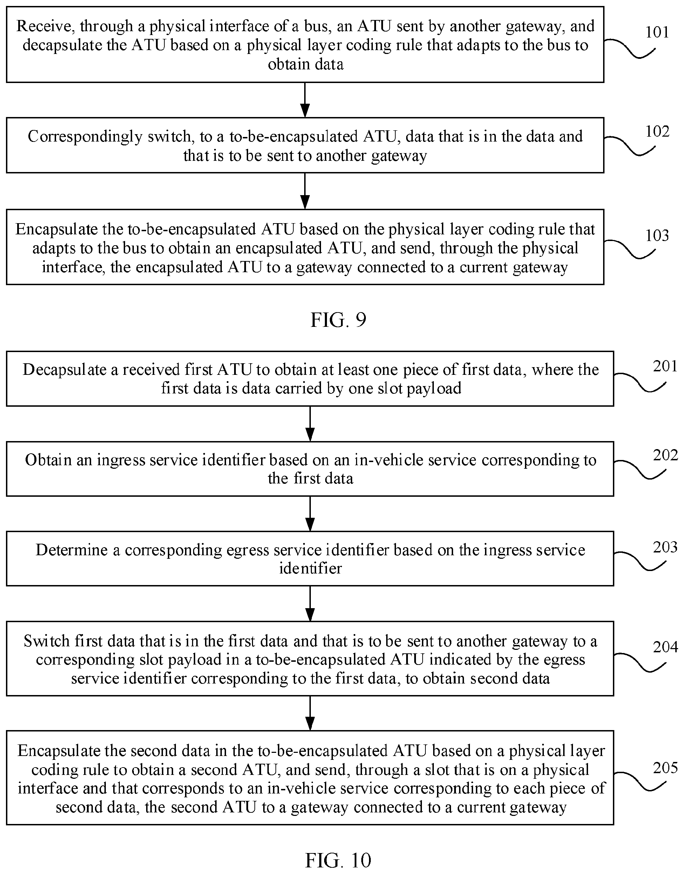

An embodiment of this application provides an in-vehicle communication method. FIG. 9 is a flowchart of an in-vehicle communication method according to an embodiment of this application. As shown in FIG. 9, the method includes:

S101: Receive, through a physical interface of a bus, an ATU sent by another gateway, and decapsulate the ATU based on a physical layer coding rule that adapts to the bus to obtain data.

The physical interface is an interface divided based on a slot rule.

S102: Correspondingly switch, to a to-be-encapsulated ATU, data part that is in the data and that is to be sent to another gateway.

S103: Encapsulate the to-be-encapsulated ATU based on the physical layer coding rule that adapts to the bus to obtain an encapsulated ATU, and send, through the physical interface, the encapsulated ATU to a gateway connected to a current gateway.

That the encapsulated ATU is sent, through the physical interface, to the gateway connected to the current gateway may be that: an ATU included in a multiframe is sent, through a slot on the physical interface, to the gateway connected to the current gateway. A quantity of ATUs in the multiframe is determined based on a bandwidth of the physical interface.

Each ATU includes one APDU, and the APDU includes an OH and a slot payload that carries data. Data carried by each slot payload corresponds to an in-vehicle service, and the data is transmitted through a slot that is on the physical interface and that corresponds to the in-vehicle service corresponding to the data. The OH is formed by a reserved part, a multiframe indication, message content, a type indication, and a cyclic redundancy check code. The multiframe indication indicates a sequence number of an ATU corresponding to an APDU to which the OH belongs in the multiframe, the message content is used to carry message data, and the type indication indicates content carried in the reserved part.

If the bus is an Ethernet bus, the ATU further includes a byte preamble, an end-of-frame delimiter EFD, and an interframe gap IPG. It should be noted that a format of the ATU, content of the APDU in each ATU, and a quantity of ATUs in each multiframe are described in the foregoing example, and are not elaborated herein.

In a possible implementation, the physical interface divided based on the slot rule is a physical interface whose bandwidth is divided based on a slot quantity that is determined based on the bandwidth of the physical interface of the bus, an overhead of an encapsulation unit, and a minimum bandwidth granularity for carrying a service.

In some examples, the method is shown in FIG. 10. FIG. 10 is a flowchart of an in-vehicle communication method according to an embodiment of this application. The method includes:

S201: Decapsulate a received first ATU to obtain at least one piece of first data, where the first data is data carried by one slot payload.

S202: Obtain an ingress service identifier based on an in-vehicle service corresponding to the first data.

S203: Determine a corresponding egress service identifier based on the ingress service identifier.

S204: Switch first data part that is in the first data and that is to be sent to another gateway to a corresponding slot payload in a to-be-encapsulated ATU indicated by the egress service identifier corresponding to the first data, to obtain second data.

S205: Encapsulate the second data in the to-be-encapsulated ATU based on the physical layer coding rule to obtain a second ATU, and send, through a slot that is on a physical interface and that corresponds to an in-vehicle service corresponding to each piece of second data, the second ATU to a gateway connected to a current gateway.

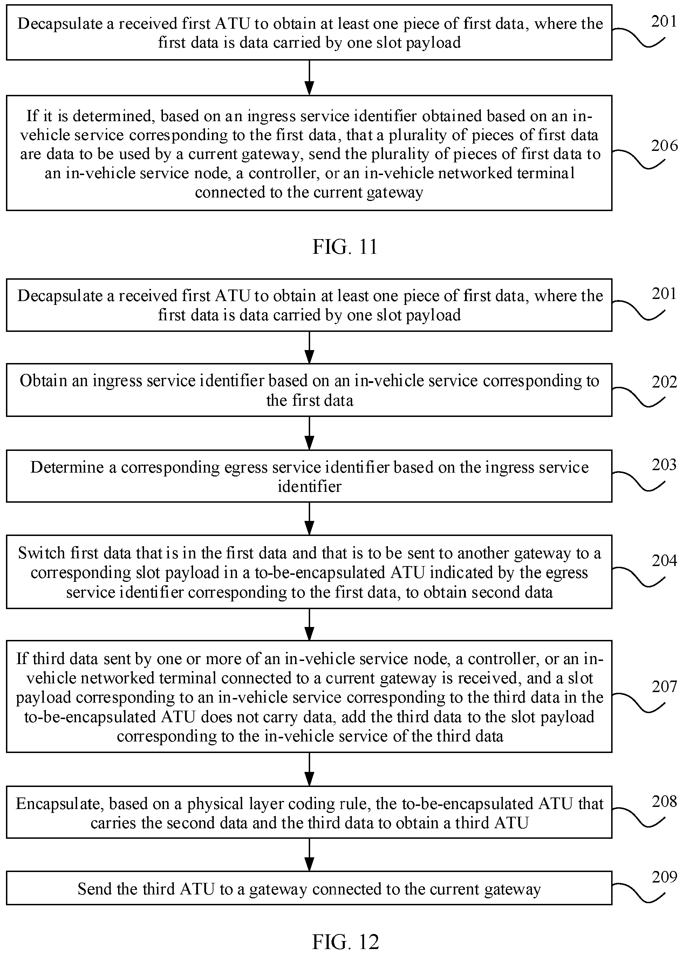

In some examples, the method is shown in FIG. 11. FIG. 11 is a flowchart of an in-vehicle communication method according to an embodiment of this application. After S201, the method further includes:

S206: If it is determined, based on the ingress service identifier obtained based on the in-vehicle service corresponding to the first data, that multiple pieces of first data are data to be used by the current gateway, send the multiple pieces of first data to an in-vehicle service node, a controller, or an in-vehicle networked terminal connected to the current gateway.

In some examples, the method is shown in FIG. 12. FIG. 12 is a flowchart of an in-vehicle communication method according to an embodiment of this application. After S204, the method further includes:

S207: If third data sent by one or more of the in-vehicle service node, the controller, or the in-vehicle networked terminal connected to the current gateway is received, and a slot payload corresponding to an in-vehicle service corresponding to the third data in the to-be-encapsulated ATU does not carry data, add the third data to the slot payload corresponding to the in-vehicle service of the third data.

Each piece of third data is carried by one slot payload.

S208: Encapsulate, based on the physical layer coding rule, the to-be-encapsulated ATU that carries the second data and the third data to obtain a third ATU.

S209: Send the third ATU to the gateway connected to the current gateway.

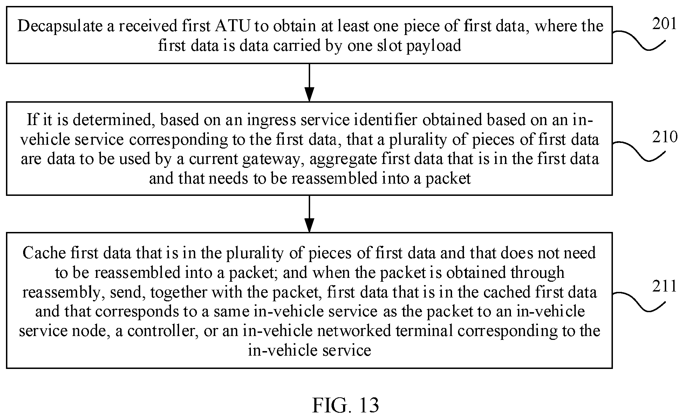

In some examples, the method is shown in FIG. 13. FIG. 13 is a flowchart of an in-vehicle communication method according to an embodiment of this application. After S201, the method further includes:

S210: If it is determined, based on the ingress service identifier obtained based on the in-vehicle service corresponding to the first data, that multiple pieces of first data are data to be used by the current gateway, aggregate first data part that is in the first data and that needs to be reassembled into a packet.

S211: Cache first data part that is in the multiple pieces of first data and that does not need to be reassembled into a packet; and when the packet is obtained through reassembly, send, together with the packet, first data part that is in the cached first data and that corresponds to a same in-vehicle service as the packet to an in-vehicle service node, a controller, or an in-vehicle networked terminal corresponding to the in-vehicle service.

In a possible implementation, K pieces of 65B data corresponding to a same service are added to a slot payload corresponding to an in-vehicle service of the K pieces of 65B data, where each slot on the physical interface transmits K pieces of 65B data each time, and K is a positive integer.

In a possible implementation, a first bandwidth that is of the physical interface and that is used to receive the ATU is smaller than a second bandwidth that is of the physical interface and that is used to send an encapsulated ATU; and it is determined, based on the first bandwidth of the physical interface, that X pieces of 65B data are transmitted by each slot, and it is determined, based on the second physical interface, that Y pieces of 65B data are transmitted by each slot, where Z=X-Y, and X and Y are positive integers. If Z is an integer less than 0, Z pieces of invalid data IDLE are added to a slot payload that does not carry data, and encapsulation is performed to obtain an encapsulated ATU. If Z is an integer greater than 0, IDLE is deleted from Z slot payloads, and encapsulation is performed to obtain an encapsulated ATU. In a possible implementation, an operations, administration, and maintenance OAM message is inserted between sent multiframes that are formed by ATUs, where the OAM message carries all OAM content used for bus link monitoring

An embodiment of the present invention provides a terminal device. The terminal device includes a processor and a memory. The memory is configured to store computer instructions, and when the processor executes the computer instructions, the terminal device is enabled to perform the in-vehicle communication method in the foregoing embodiments.

An embodiment of the present invention provides a terminal device, where the terminal device includes at least one terminal device provided in the foregoing embodiment.

A person of ordinary skill in the art may be aware that the units and algorithmic steps in the examples described with reference to embodiments disclosed in this specification may be implemented by electronic hardware or a combination of computer software and electronic hardware. Whether the functions are implemented by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

## Claims

1. An in-vehicle communication system (200), comprising:

   multiple gateways (201) connected through a bus, wherein an automotive slice network, ASN, apparatus (2011) is disposed in each gateway; the ASN apparatus (2011) being configured to send data to one or more of an in-vehicle service node (202), a controller (203), or an in-vehicle networked terminal (204) through a physical interface that is on the gateway and that is divided based on a slot rule, and being configured to send to another gateway connected to the gateway an ASN transport unit, ATU, encapsulated by the ASN apparatus (2011); and the ATU is obtained by encapsulating data of each in-vehicle service based on a physical layer coding rule that adapts to the bus; the in-vehicle service node (202), the controller (203), or the in-vehicle networked terminal (204) connected to the gateway, being configured to receive data sent by the gateway or send, to the gateway, data corresponding to an in-vehicle service of the in-vehicle service node (202), the controller (203), or the in-vehicle networked terminal (204); and the other gateway being configured to receive and decapsulate the ATU.

2. The system (200) according to claim 1, wherein

   the gateway is specifically configured to send, on demand if the ASN apparatus (2011) determines that multiple pieces of data in data obtained by the ASN apparatus (2011) through decapsulation are data to be used by the gateway, the multiple pieces of data to the in-vehicle service node (202), the controller (203), or the in-vehicle networked terminal (204) connected to the gateway; and

the gateway is further configured to: if the gateway receives the data that corresponds to the in-vehicle service of the in-vehicle service node (202), the controller (203), or the in-vehicle networked terminal (204) connected to the gateway and that is sent by the in-vehicle service node (202), the controller (203), or the in-vehicle networked terminal (204), encapsulate the data into an ATU by using the ASN apparatus (2011), and send the ATU to another gateway.

3. The system (200) according to claim 2, wherein the physical interface divided based on the slot rule is a physical interface whose bandwidth is divided based on a slot quantity that is determined based on the bandwidth of the physical interface of the bus, an overhead of an encapsulation unit, and a minimum bandwidth granularity for carrying a service.

4. The system (200) according to any one of claims 1 to 3, wherein

the gateway is specifically configured to transmit, through a slot on the physical interface, an ATU comprised in a multiframe to the another gateway connected to the gateway, wherein a quantity of ATUs in the multiframe is determined based on the bandwidth of the physical interface.

5. The system (200) according to claim 4, wherein

the ATU comprises multiple ASN packet data units, APDUs, and the APDU is formed by an overhead, OH, and a slot payload that carries data, wherein

data carried by each slot payload corresponds to an in-vehicle service, and the data is transmitted through a slot that is on the physical interface and that corresponds to the in-vehicle service corresponding to the data; and

the OH is formed by a reserved part, a multiframe indication, message content, a type indication, and a cyclic redundancy check code, wherein the multiframe indication indicates a sequence number of an ATU corresponding to an APDU to which the OH belongs in the multiframe, the message content is used to carry message data, and the type indication indicates content carried in the reserved part.

6. The system (200) according to claim 5, wherein the bus is an Ethernet bus, and the ATU further comprises:

a byte preamble, an end-of-frame delimiter, EFD, and an interframe gap, IPG.

7. The system (200) according to claim 5 or 6, wherein the slot payload carries K pieces of 65B data, K is a positive integer, and each slot on the physical interface transmits K pieces of 65B data each time.

8. An in-vehicle communication method, comprising:

receiving (101) by a first gateway, through a physical interface of a bus, an automotive slice network, ASN, transport unit, ATU, sent by a second gateway, and decapsulating by the first gateway the ATU based on a physical layer coding rule that adapts to the bus to obtain data, wherein the physical interface is an interface divided based on a slot rule;

correspondingly switching (102), to a to-be-encapsulated ATU, data part that is in the data and that is to be sent to third gateway;

encapsulating (103) by the first gateway the to-be-encapsulated ATU data part based on the physical layer coding rule that adapts to the bus to obtain an encapsulated ATU; and sending by the first gateway, through the physical interface, the encapsulated ATU to the third gateway connected to the first gateway; and

sending by the first gateway another data part that is in the data to an in-vehicle service node (202), a controller (203), or an in-vehicle networked terminal (204) through a physical interface that is on the first gateway and that is divided based on a slot rule.

9. The method according to claim 8, wherein the physical interface divided based on the slot rule is a physical interface whose bandwidth is divided based on a slot quantity that is determined based on the bandwidth of the physical interface of the bus, an overhead of an encapsulation unit, and a minimum bandwidth granularity for carrying a service.

10. The method according to claim 8 or 9, wherein the sending, through the physical interface, the encapsulated ATU to a gateway connected to a current gateway comprises:

sending, through a slot on the physical interface, an ATU comprised in a multiframe to the gateway connected to the current gateway, wherein a quantity of ATUs in the multiframe is determined based on the bandwidth of the physical interface.

11. The method according to any one of claims 8 to 10, wherein

the ATU comprises multiple ASN packet data units, APDUs, and the APDU is formed by an overhead, OH, and a slot payload that carries data, wherein

data carried by each slot payload corresponds to an in-vehicle service, and the data is transmitted through a slot that is on the physical interface and that corresponds to the in-vehicle service corresponding to the data; and

the OH is formed by a reserved part, a multiframe indication, message content, a type indication, and a cyclic redundancy check code, wherein the multiframe indication indicates a sequence number of an ATU corresponding to an APDU to which the OH belongs in the multiframe, the message content is used to carry message data, and the type indication indicates content carried in the reserved part.

12. The method according to claim 11, wherein the bus is an Ethernet bus, and the ATU further comprises a byte preamble, an end-of-frame delimiter, EFD, and an interframe gap, IPG.

13. The method according to claim 11 or 12, wherein

decapsulating a received first ATU to obtain at least one piece of first data, wherein the first data is data carried by one slot payload; obtaining an ingress service identifier based on an in-vehicle service corresponding to the first data; determining a corresponding egress service identifier based on the ingress service identifier; switching first data part that is in the first data and that is to be sent to another gateway to a corresponding slot payload in a to-be-encapsulated ATU indicated by the egress service identifier corresponding to the first data, to obtain second data; and encapsulating the second data in the to-be-encapsulated ATU based on the physical layer coding rule to obtain a second ATU, and sending, through a slot that is on the physical interface and that corresponds to an in-vehicle service corresponding to each piece of second data, the second ATU to the gateway connected to the current gateway.

14. The method according to claim 13, after the decapsulating a received first ATU to obtain at least one piece of first data, further comprising:

if it is determined, based on the ingress service identifier obtained based on the in-vehicle service corresponding to the first data, that multiple pieces of first data are data to be used by the current gateway, sending the multiple pieces of first data to an in-vehicle service node (202), a controller (203), or an in-vehicle networked terminal (204) connected to the current gateway.

**Patentansprüche**

1. Fahrzeuginternes Kommunikationssystem (200), umfassend:

mehrere Gateways (201), die über einen Bus verbunden sind, wobei in jedem Gateway eine Automotive-Slice-Network-Einrichtung, ASN-Einrichtung, (2011) angeordnet ist; wobei die ASN-Einrichtung (2011) konfiguriert ist, um Daten über eine physische Schnittstelle, die sich auf dem Gateway befindet und basierend auf einer Slot-Regel unterteilt ist, an eines oder mehrere eines fahrzeuginternen Dienstknotens (202), einer Steuerung (203) oder eines fahrzeuginternen Netzwerkendgeräts (204) zu senden, und konfiguriert ist, um eine durch die ASN-Einrichtung (2011) verkapselte ASN-Transporteinheit, ATU, an ein anderes Gateway zu senden, das mit dem Gateway verbunden ist; und wobei die ATU durch Verkapseln von Daten jedes fahrzeuginternen Dienstes basierend auf einer Codierungsregel der physikalischen Schicht erlangt wird, die sich an den Bus anpasst; wobei der fahrzeuginterne Dienstknoten (202), die Steuerung (203) oder das fahrzeuginterne Netzwerkendgerät (204), das mit dem Gateway verbunden ist, konfiguriert ist, um durch das Gateway gesendete Daten zu empfangen oder Daten, die einem fahrzeuginternen Dienst des fahrzeuginternen Dienstknotens (202), der Steuerung (203) oder des fahrzeuginternen Netzwerkendgeräts (204) entsprechen, an das Gateway zu senden; und wobei das andere Gateway konfiguriert ist, um die ATU zu empfangen und zu entkapseln.

2. System (200) nach Anspruch 1, wobei

das Gateway insbesondere konfiguriert ist, um auf Anfrage, wenn die ASN-Einrichtung (2011) durch Entkapselung bestimmt, dass mehrere Datenelemente in den durch die ASN-Einrichtung (2011) erlangten Daten durch das Gateway zu verwenden sind, die Datenelemente an den fahrzeuginternen Dienstknoten (202), die Steuerung (203) oder fahrzeuginterne Netzwerkendgerät (204) zu senden, das mit dem Gateway verbunden ist; und das Gateway ferner zu Folgendem konfiguriert ist: wenn das Gateway die Daten empfängt, die dem fahrzeuginternen Dienst des fahrzeuginternen Dienstknotens (202), der Steuerung (203) oder dem fahrzeuginternen Netzwerkendgerät (204) entsprechen, das mit dem Gateway verbunden ist, und die durch den fahrzeuginternen Dienstknoten (202), die Steuerung (203) oder das fahrzeuginterne Netzwerkendgerät (204) gesendet werden, Verkapseln der Daten in eine ATU unter Verwendung der ASN-Einrichtung (2011) und Senden der ATU an ein anderes Gateway.

3. System (200) nach Anspruch 2, wobei die basierend auf der Slot-Regel unterteilte physikalische Schnittstelle eine physikalische Schnittstelle ist, deren Bandbreite basierend auf einer Slot-Anzahl unterteilt wird, die basierend auf der Bandbreite der physikalischen Schnittstelle des Busses, eines Overheads einer Verkapselungseinheit und einer minimalen Bandbreitengranularität für das Übermitteln eines Dienstes bestimmt wird.

4. System (200) nach einem der Ansprüche 1 bis 3, wobei
das Gateway insbesondere konfiguriert ist, um über einen Slot auf der physikalischen Schnittstelle eine in einem Multiframe enthaltene ATU an das andere Gateway zu übertragen, das mit dem Gateway verbunden ist, wobei eine Anzahl der ATUs in dem Multiframe basierend auf der Bandbreite der physikalischen Schnittstelle bestimmt wird.

5. System (200) nach Anspruch 4, wobei

die ATU mehrere ASN-Paketdateneinheiten, APDUs, umfassen und die APDU durch ein Overhead, OH, und eine Slot-Nutzlast gebildet ist, die Daten übermittelt, wobei
die durch jede Slot-Nutzlast übermittelten Daten einem fahrzeuginternen Dienst entsprechen und die Daten über einen Slot übertragen werden, der sich auf der physischen Schnittstelle befindet und der dem fahrzeuginternen Dienst entspricht, der den Daten entspricht; und
das OH durch einen reservierten Teil, eine Multiframe-Angabe, einen Nachrichteninhalt, eine Typangabe und einen zyklischen Redundanzprüfcode gebildet ist, wobei die Multiframe-Angabe eine Sequenznummer einer ATU angibt, die einer APDU entspricht, zu welcher das OH in dem Multiframe gehört, der Nachrichteninhalt verwendet wird, um Nachrichtendaten zu übermitteln und die Typangabe den in dem reservierten Teil übermittelten Inhalt angibt.

6. System (200) nach Anspruch 5, wobei es sich bei dem Bus um einen Ethernet-Bus handelt und die ATU ferner Folgendes umfasst: ein Byte-Präambel, einen Frame-Ende-Begrenzer, EFD, und eine Interframe-Lücke, IPG.

7. System (200) nach Anspruch 5 oder 6, wobei die Slot-Nutzlast K 65 B Datenelemente übermittelt, K eine positive ganze Zahl ist und jeder Slot auf der physikalischen Schnittstelle jedes Mal K 65 B Datenelemente überträgt.

8. Fahrzeuginternes Kommunikationsverfahren, umfassend:

Empfangen (101) einer Automotive-Slice-Network-Transporteinheit, ASN-ATU, die durch ein zweites Gateway gesendet wird, durch ein erstes Gateway über eine physikalische Schnittstelle eines Busses und Verkapseln der ATU durch das erste Gateway basierend auf einer Codierungsregel der physikalischen Schicht, die sich an den Bus anpasst, um Daten zu erlangen, wobei die physikalische Schnittstelle eine Schnittstelle ist, die basierend auf einer Slot-Regel unterteilt ist;
entsprechend Umschalten (102) eines Datenteils, der sich in den Daten befindet und der an das dritte Gateway zu senden ist, in eine zu verkapselnde ATU;
Verkapseln (103) des zu verkapselnden ATU-Datenteils basierend auf der Codierungsregel der physikalischen Schicht, die sich an den Bus anpasst, durch das erste Gateway, um eine verkapselte ATU zu erlangen; und Senden der verkapselten ATU durch das erste Gateway über die physikalische Schnittstelle an das dritte Gateway, das mit dem ersten Gateway verbunden ist; und
Senden eines anderen Datenteils, der sich in den Daten befindet, durch das erste Gateway über eine physische Schnittstelle, die sich auf dem ersten Gateway befindet und basierend auf einer Slot-Regel aufgeteilt ist, an einen fahrzeuginternen Dienstknoten (202), eine Steuerung (203) oder ein fahrzeuginternes Netzwerkendgerät (204).

9. Verfahren nach Anspruch 8, wobei
die basierend auf der Slot-Regel unterteilte physikalische Schnittstelle eine physikalische Schnittstelle ist, deren Bandbreite basierend auf einer Slot-Anzahl unterteilt wird, die basierend auf der Bandbreite der physikalischen Schnittstelle des Busses, eines Overheads einer Verkapselungseinheit und einer minimalen Bandbreitengranularität für das Übermitteln eines Dienstes bestimmt wird.

10. Verfahren nach Anspruch 8 oder 9, wobei das Senden der verkapselten ATU über die physikalische Schnittstelle an ein Gateway, das mit einem aktuellen Gateway verbunden ist, Folgendes umfasst:
Senden einer in einem Multiframe enthaltenen ATU über einen Slot auf der physikalischen Schnittstelle an das Gateway, das mit dem aktuellen Gateway verbunden ist, wobei eine Anzahl der ATUs in dem Multiframe basierend auf der Bandbreite der physikalischen Schnittstelle bestimmt wird.

11. Verfahren nach einem der Ansprüche 8 bis 10, wobei

die ATU mehrere ASN-Paketdateneinheiten, APDUs, umfassen und die APDU durch ein Overhead, OH, und eine Slot-Nutzlast gebildet ist, die Daten übermittelt, wobei

die durch jede Slot-Nutzlast übermittelten Daten einem fahrzeuginternen Dienst entsprechen und die Daten über einen Slot übertragen werden, der sich auf der physischen Schnittstelle befindet und der dem fahrzeuginternen Dienst entspricht, der den Daten entspricht; und

das OH durch einen reservierten Teil, eine Multiframe-Angabe, einen Nachrichteninhalt, eine Typangabe und einen zyklischen Redundanzprüfcode gebildet ist, wobei die Multiframe-Angabe eine Sequenznummer einer ATU angibt, die einer APDU entspricht, zu welcher das OH in dem Multiframe gehört, der Nachrichteninhalt verwendet wird, um Nachrichtendaten zu übermitteln und die Typangabe den in dem reservierten Teil übermittelten Inhalt angibt.

12. Verfahren nach Anspruch 11, wobei
es sich bei dem Bus um einen Ethernet-Bus handelt und die ATU ferner eine Byte-Präambel, einen Frame-Ende-Begrenzer, EFD, und eine Interframe-Lücke, IPG, umfasst.

13. Verfahren nach Anspruch 11 oder 12, wobei

Entkapseln einer empfangenen ersten ATU, um mindestens ein erstes Datenelement zu erlangen, wobei es sich bei den ersten Daten um Daten handelt, die durch eine Slot-Nutzlast übermittelt werden;
Erlangen einer Eingangsdienstkennung basierend auf einem fahrzeuginternen Dienst, der den ersten Daten entspricht;
Bestimmen einer entsprechenden Ausgangsdienstkennung basierend auf der Eingangsdienstkennung;
Umschalten des ersten Datenteils, der sich in den ersten Daten befindet und an ein anderes Gateway zu senden ist, in eine entsprechende Slot-Nutzlast in einer zu verkapselnden ATU, die durch die Ausgangsdienstkennung angegeben wird, die dem ersten Datenteil entspricht, um zweite Daten zu erlangen; und
Verkapseln der zweiten Daten basierend auf der Codierungsregel der physikalischen Schicht in die zu verkapselnde ATU, um eine zweite ATU zu erlangen, und Senden der zweiten ATU über einen Slot, der sich auf der physikalischen Schnittstelle befindet und der einem fahrzeuginternen Dienst entspricht, der jedem zweiten Datenelement entspricht, an das Gateway, das mit dem aktuellen Gateway verbunden ist.

14. Verfahren nach Anspruch 13, ferner umfassend, nach dem Entkapseln einer empfangenen ersten ATU, um mindestens ein erstes Datenelement zu erlangen:
wenn basierend auf der Eingangsdienstkennung, die basierend auf dem fahrzeuginternen Dienst erlangt wurde, der den ersten Daten entspricht, bestimmt wird, dass es sich bei mehreren ersten Datenelementen um Daten handelt, die durch das aktuelle Gateway zu verwenden sind, Senden der mehreren ersten Datenelemente an einen fahrzeuginternen Dienstknoten (202), eine Steuerung (203) oder ein fahrzeuginternes Netzwerkendgerät (204), das mit dem aktuellen Gateway verbunden ist.

## Revendications

1. Système de communication embarqué (200), comprenant :

plusieurs passerelles (201) connectées via un bus, dans lequel un appareil de réseau de tranche automobile, ASN, (2011) est disposé dans chaque passerelle ; l'appareil ASN (2011) étant configuré pour envoyer des données à un ou plusieurs d'un nœud de service embarqué (202), d'un dispositif de commande (203) ou d'un terminal en réseau embarqué (204) via une interface physique qui est sur la passerelle et qui est divisée sur la base d'une règle de créneau, et étant configuré pour envoyer à une autre passerelle connectée à la passerelle une unité de transport ASN, ATU, encapsulée par le l'appareil ASN (2011) ;
et l'ATU est obtenue en encapsulant les données de chaque service embarqué sur la base d'une règle de codage de couche physique qui s'adapte au bus ;
le nœud de service embarqué (202), le dispositif de commande (203) ou le terminal en réseau embarqué (204) connecté à la passerelle, étant configuré pour recevoir des données envoyées par la passerelle ou pour envoyer, à la passerelle, des données correspondant à un service embarqué du nœud de service embarqué (202), du dispositif de commande (203) ou du terminal en réseau embarqué (204) ; et
l'autre passerelle étant configurée pour recevoir et décapsuler l'ATU.

2. Système (200) selon la revendication 1, dans lequel

la passerelle est spécifiquement configurée pour envoyer, sur demande si l'appareil ASN (2011) détermine que plusieurs éléments de données dans les données obtenues par l'appareil ASN (2011) via décapsulation sont des données destinées à être utilisées par la passerelle, les plusieurs éléments de données au nœud de service embarqué (202), au dispositif de commande (203) ou au terminal en réseau embarqué (204) connecté à la passerelle ; et la passerelle est également configurée pour : si la passerelle reçoit les données qui correspondent au service embarqué du nœud de service embarqué (202), du dispositif de commande (203) ou du terminal en réseau embarqué (204) connecté à la passerelle et qui sont envoyées par le nœud de service embarqué (202), le dispositif de commande (203) ou le terminal en réseau embarqué (204), encapsuler les données dans une ATU à l'aide de l'appareil ASN (2011) et envoyer l'ATU à une autre passerelle.

3. Système (200) selon la revendication 2, dans lequel l'interface physique divisée sur la base de la règle de créneau est une interface physique dont la bande passante est divisée sur la base d'une quantité de créneaux qui est déterminée sur la base de la bande passante de l'interface physique du bus, d'une surcharge d'une unité d'encapsulation et d'une granularité de bande passante minimale pour transporter un service.

4. Système (200) selon l'une quelconque des revendications 1 à 3, dans lequel la passerelle est spécifiquement configurée pour transmettre, via un créneau sur l'interface physique, une ATU comprise dans une multitrame à l'autre passerelle connectée à la passerelle, dans lequel une quantité d'ATU dans la multitrame est déterminée sur la base de la bande passante de l'interface physique.

5. Système (200) selon la revendication 4, dans lequel

   l'ATU comprend plusieurs unités de données par paquets ASN, APDU, et l'APDU est formée d'une surcharge, OH, et d'une charge utile de créneau qui transporte des données, dans lequel
   les données transportées par chaque charge utile de créneau correspondent à un service embarqué, et les données sont transmises via un créneau qui est sur l'interface physique et qui correspond au service embarqué correspondant aux données ; et
   l'OH est formée d'une partie réservée, d'une indication multitrame, d'un contenu de message, d'une indication de type et d'un code de contrôle de redondance cyclique, dans lequel l'indication multitrame indique un numéro de séquence d'une ATU correspondant à une APDU à laquelle l'OH appartient dans la multitrame, le contenu de message est utilisé pour transporter des données de message et l'indication de type indique le contenu transporté dans la partie réservée.

6. Système (200) selon la revendication 5, dans lequel le bus est un bus Ethernet, et l'ATU comprend également :
   un préambule d'octet, un délimiteur de fin de trame, EFD, et un intervalle inter-trame, IPG.

7. Système (200) selon la revendication 5 ou 6, dans lequel
   la charge utile de créneau transporte K éléments de données de 65B octets, K est un entier positif, et chaque créneau sur l'interface physique transmet K éléments de données de 65B octets à chaque fois.

8. Procédé de communication embarqué, comprenant :

   la réception (101) par une première passerelle, via une interface physique d'un bus, d'un réseau de tranche automobile, ASN, d'une unité de transport, ATU, envoyée par une deuxième passerelle, et la décapsulation par la première passerelle de l'ATU sur la base d'une règle de codage de couche physique qui s'adapte au bus pour obtenir des données, dans lequel l'interface physique est une interface divisée sur la base d'une règle de créneau ;
   la commutation (102) en conséquence, vers une ATU à encapsuler, de la partie de données qui est dans les données et qui doit être envoyée à la troisième passerelle ;
   l'encapsulation (103) par la première passerelle de la partie de données d'ATU à encapsuler sur la base de la règle de codage de couche physique qui s'adapte au bus pour obtenir une ATU encapsulée ; et l'envoi par la première passerelle, via l'interface physique, de l'ATU encapsulée à la troisième passerelle connectée à la première passerelle ; et
   l'envoi par la première passerelle d'une autre partie de données qui est dans les données à un nœud de service embarqué (202), à un dispositif de commande (203) ou à un terminal en réseau embarqué (204) via une interface physique qui est sur la première passerelle et qui est divisée sur la base d'une règle de créneau.

9. Procédé selon la revendication 8, dans lequel l'interface physique divisée sur la base de la règle de créneau est une interface physique dont la bande passante est divisée sur la base d'une quantité de créneaux qui est déterminée sur la base de la bande passante de l'interface physique du bus, d'une surcharge d'une unité d'encapsulation et d'une granularité de bande passante minimale pour transporter un service.

10. Procédé selon la revendication 8 ou 9, dans lequel l'envoi, via l'interface physique, de l'ATU encapsulée à une passerelle connectée à une passerelle actuelle comprend :
l'envoi, via un créneau sur l'interface physique, d'une ATU comprise dans une multitrame à la passerelle connectée à la passerelle actuelle, dans lequel une quantité d'ATU dans la multitrame est déterminée sur la base de la bande passante de l'interface physique.

11. Procédé selon l'une quelconque des revendications 8 à 10, dans lequel

l'ATU comprend plusieurs unités de données par paquets ASN, APDU, et l'APDU est formée d'une surcharge, OH, et d'une charge utile de créneau qui transporte des données, dans lequel
les données transportées par chaque charge utile de créneau correspondent à un service embarqué, et les données sont transmises via un créneau qui est sur l'interface physique et qui correspond au service embarqué correspondant aux données ; et
l'OH est formée d'une partie réservée, d'une indication multitrame, d'un contenu de message, d'une indication de type et d'un code de contrôle de redondance cyclique, dans lequel l'indication multitrame indique un numéro de séquence d'une ATU correspondant à une APDU à laquelle l'OH appartient dans la multitrame, le contenu de message est utilisé pour transporter des données de message et l'indication de type indique le contenu transporté dans la partie réservée.

12. Procédé selon la revendication 11, dans lequel le bus est un bus Ethernet, et l'ATU comprend également un préambule d'octet, un délimiteur de fin de trame, EFD, et un intervalle inter-trame, IPG.

13. Procédé selon la revendication 11 ou 12, dans lequel

la décapsulation d'une première ATU reçue pour obtenir au moins un élément de premières données, dans lequel les premières données sont des données transportées par une charge utile de créneau ;
l'obtention d'un identifiant de service d'entrée sur la base d'un service embarqué correspondant aux premières données ;
la détermination d'un identifiant de service de sortie correspondant sur la base de l'identifiant de service d'entrée ;
la commutation de la première partie de données qui est dans les premières données et qui doit être envoyée à une autre passerelle vers une charge utile de créneau correspondante dans une ATU à encapsuler indiquée par l'identifiant de service de sortie correspondant aux premières données, pour obtenir de secondes données ; et
l'encapsulation des secondes données dans l'ATU à encapsuler sur la base de la règle de codage de couche physique pour obtenir une seconde ATU, et l'envoi, via un créneau qui est sur l'interface physique et qui correspond à un service embarqué correspondant à chaque élément de secondes données, de la seconde ATU à la passerelle connectée à la passerelle actuelle.

14. Procédé selon la revendication 13, après la décapsulation d'une première ATU reçue pour obtenir au moins un élément de premières données, comprenant également :
s'il est déterminé, sur la base de l'identifiant de service d'entrée obtenu sur la base du service embarqué correspondant aux premières données, que plusieurs éléments de premières données sont des données destinées à être utilisées par la passerelle actuelle, l'envoi des plusieurs éléments de premières données à un nœud de service embarqué (202), à un dispositif de commande (203) ou à un terminal en réseau embarqué (204) connecté à la passerelle actuelle.

Vehicle 100

| Propulsion system 110 | Sensor system 120 | Control system 130 | Peripheral device 140 |
|---|---|---|---|
| Engine/Motor 114 | Global positioning system 126 | Steering unit 136 | Wireless communication system 144 |
| Energy source 113 | Inertial measurement unit 125 | Accelerator 135 | Touchscreen 143 |
| Transmission apparatus 112 | Lidar sensor 124 | Brake unit 134 | Microphone 142 |
| Wheel/Tire 111 | Camera sensor 123 | Sensor fusion algorithm 133 | Speaker 141 |
| | Millimeter-wave radar sensor 122 | Computer vision system 132 | |
| | Brake 121 | Navigation/ Route control system 131 | |

Power supply 150

Computing apparatus 160

Processor 161

Transceiver 162

Memory 163

Instructions 1631

Map data 1632

User interface 170

FIG. 1

FIG. 2

| 65b | 65b | 65b | 65b | 65b | 65b | ... | 65b | 65b | 65b | 65b |
|-----|-----|-----|-----|-----|-----|-----|-----|-----|-----|-----|

| Slot payload 0 | Slot payload 1 | Slot payload 2 | ... | Slot payload 94 | Slot payload 95 |
|---|---|---|---|---|---|

| Preamble part (7 bytes) | Start-of-frame delimiter (1 byte) | Overhead (7 bytes) | Slot payload (1,560 bytes) | End-of-frame delimiter (1 byte) | Interframe gap (8–24 bytes) |
|---|---|---|---|---|---|

| Preamble part (7 bytes) | Start-of-frame delimiter (1 byte) | ASN packet data unit (1,567 bytes) | End-of-frame delimiter (1 byte) | Interframe gap (8–24 bytes) |
|---|---|---|---|---|

| Start part | Payload part | End-of-frame part | Padding part of invalid data |
|---|---|---|---|

FIG. 3

EP 4 451 712 B1

| | | | 0 1 2 3 4 5 6 7 | 8 9 10 11 12 13 14 15 | 16 17 18 19 20 21 22 23 | 24 25 26 27 28 29 30 31 | 32 33 34 35 36 37 38 39 | 40 41 42 43 44 45 46 47 | 48 49 50 51 52 53 54 55 | 56 57 58 59 60 61 62 63 |
|---|---|---|---|---|---|---|---|---|---|---|
| 1 | 1 | 0 | 0*33 | C0 | C1 | C2 | C3 | 0*55 | 0*55 | 0*05 |
| 2 | 0 | 1 | 0*55 | 0*55 | 0*55 | 0*D5 | Overhead in an ASN packet data unit (4 bytes) | | | |
| | 0 | 1 | Overhead in the ASN packet data unit (3 bytes) | | | | | | | |
| ... | ... | | Slot payload in the ASN packet data unit (1,560 bytes) | | | | | | | |
| 197 | 0 | 1 | | | | | | | | |
| 198 | 1 | 0 | 0*B4 | | | | C4 | C5 | C6 | C7 |

FIG. 4 A

33

| | SH | 0 1 2 3 4 5 6 7 | 8 9 10 11 12 13 14 15 | 16 17 18 19 20 21 22 23 | 24 25 26 27 28 29 30 31 | 32 33 34 35 36 37 38 39 | 40 41 42 43 44 45 46 47 | 48 49 50 51 52 53 54 55 | 56 57 58 59 60 61 62 63 |
|---|---|---|---|---|---|---|---|---|---|
| 1 | 1 0 | 0x78 | 0x55 | 0x55 | 0x55 | 0x55 | 0x55 | 0x55 | 0xD5 |
| 2 | 0 1 | APDU OH (7 bytes) | | | | | | | |
| ⋮ | 0 1 | APDU Payload (1560 Bytes) | | | | | | | |
| | ... | | | | | | | | |
| 196 | 0 1 | | | | | | | | |
| 197 | 1 0 | 0xFF | | | | | | | |

FIG. 4 B

| | | | 0 1 2 3 4 5 6 7 | 8 9 10 11 12 13 14 15 | 16 17 18 19 20 21 22 23 | 24 25 26 27 28 29 30 31 | 32 33 34 35 36 37 38 39 | 40 41 42 43 44 45 46 47 | 48 49 50 51 52 53 54 55 | 56 57 58 59 60 61 62 63 |
|---|---|---|---|---|---|---|---|---|---|---|
| 1 | 1 | 0 | 0*33 | C0 | C1 | C2 | C3 | | 0*55 | 0*55 | 0*05 |
| 2 | 0 | 1 | 0*55 | 0*55 | 0*55 | 0*D5 | Overhead in an ASN packet data unit (4 bytes) | | | |
| | 0 | 1 | Overhead in the ASN packet data unit (3 bytes) | | | | | | | |
| | ... | | Slot payload in the ASN packet data unit (1,560 bytes) | | | | | | | |
| 197 | 0 | 1 | | | | | | | | |
| 198 | 1 | 0 | 0*B4 | | | | C4 | C5 | C6 | C7 |

FIG. 5

| | |
|---|---|
| 0 | Reserved bit |
| 1 | Multiframe indication |
| 2 | |
| 3 | |
| 4 | |
| 5 | |
| 6 | |
| 7 | |
| 8 | Type indication |
| 9 | |
| 10 | Reserved bit |
| 11 | Reserved bit |
| 12 | Reserved bit |
| 13 | Reserved bit |
| 14 | Reserved bit |
| 15 | Reserved bit |
| 16 | Message content |
| 17 | |
| 18 | |
| 19 | |
| 20 | |
| 21 | |
| 22 | |
| 23 | |
| 24 | |
| 25 | |
| 26 | |
| 27 | |
| 28 | |
| 29 | |
| 30 | |
| 31 | |
| 32 | |
| 33 | |
| 34 | |
| 35 | |
| 36 | |
| 37 | |
| 38 | |
| 39 | |
| 40 | |
| 41 | |
| 42 | |
| 43 | |
| 44 | |
| 45 | |
| 46 | |
| 47 | |
| 48 | Cyclic redundancy check code |
| 49 | |
| 50 | |
| 51 | |
| 52 | |
| 53 | |
| 54 | |
| 55 | |

FIG. 6

FIG. 7

| | Priority | H |
|---|---|---|
| | 1 | 1 |
| 0–7 | Identification part | 0*4B |
| 8–9 | Reserved | |
| 10–15 | Identification part | 0*1 |
| 16–23 | Message content | |
| 24–31 | Check | Bit interleaved parity check |
| 32–35 | Identification part (special bits) | 0*C |
| 36–39 | | 0*0 |
| 40–47 | Automatic protection switching message | Automatic protection switching data |
| 48–55 | | Automatic protection switching data |
| 56–59 | Reserved bits | 0*0 |
| 60–63 | Check | Cyclic redundancy check code |

FIG. 8

Receive, through a physical interface of a bus, an ATU sent by another gateway, and decapsulate the ATU based on a physical layer coding rule that adapts to the bus to obtain data    101

Correspondingly switch, to a to-be-encapsulated ATU, data that is in the data and that is to be sent to another gateway    102

Encapsulate the to-be-encapsulated ATU based on the physical layer coding rule that adapts to the bus to obtain an encapsulated ATU, and send, through the physical interface, the encapsulated ATU to a gateway connected to a current gateway    103

FIG. 9

Decapsulate a received first ATU to obtain at least one piece of first data, where the first data is data carried by one slot payload    201

Obtain an ingress service identifier based on an in-vehicle service corresponding to the first data    202

Determine a corresponding egress service identifier based on the ingress service identifier    203

Switch first data that is in the first data and that is to be sent to another gateway to a corresponding slot payload in a to-be-encapsulated ATU indicated by the egress service identifier corresponding to the first data, to obtain second data    204

Encapsulate the second data in the to-be-encapsulated ATU based on a physical layer coding rule to obtain a second ATU, and send, through a slot that is on a physical interface and that corresponds to an in-vehicle service corresponding to each piece of second data, the second ATU to a gateway connected to a current gateway    205

FIG. 10

Decapsulate a received first ATU to obtain at least one piece of first data, where the first data is data carried by one slot payload — 201

If it is determined, based on an ingress service identifier obtained based on an in-vehicle service corresponding to the first data, that a plurality of pieces of first data are data to be used by a current gateway, send the plurality of pieces of first data to an in-vehicle service node, a controller, or an in-vehicle networked terminal connected to the current gateway — 206

FIG. 11

Decapsulate a received first ATU to obtain at least one piece of first data, where the first data is data carried by one slot payload — 201

Obtain an ingress service identifier based on an in-vehicle service corresponding to the first data — 202

Determine a corresponding egress service identifier based on the ingress service identifier — 203

Switch first data that is in the first data and that is to be sent to another gateway to a corresponding slot payload in a to-be-encapsulated ATU indicated by the egress service identifier corresponding to the first data, to obtain second data — 204

If third data sent by one or more of an in-vehicle service node, a controller, or an in-vehicle networked terminal connected to a current gateway is received, and a slot payload corresponding to an in-vehicle service corresponding to the third data in the to-be-encapsulated ATU does not carry data, add the third data to the slot payload corresponding to the in-vehicle service of the third data — 207

Encapsulate, based on a physical layer coding rule, the to-be-encapsulated ATU that carries the second data and the third data to obtain a third ATU — 208

Send the third ATU to a gateway connected to the current gateway — 209

FIG. 12

| Decapsulate a received first ATU to obtain at least one piece of first data, where the first data is data carried by one slot payload | 201 |

| If it is determined, based on an ingress service identifier obtained based on an in-vehicle service corresponding to the first data, that a plurality of pieces of first data are data to be used by a current gateway, aggregate first data that is in the first data and that needs to be reassembled into a packet | 210 |

| Cache first data that is in the plurality of pieces of first data and that does not need to be reassembled into a packet; and when the packet is obtained through reassembly, send, together with the packet, first data that is in the cached first data and that corresponds to a same in-vehicle service as the packet to an in-vehicle service node, a controller, or an in-vehicle networked terminal corresponding to the in-vehicle service | 211 |

FIG. 13

**EP 4 451 712 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020008044 A1